# EUROPEAN PATENT APPLICATION

(11) **EP 4 250 579 A1**
(43) Date of publication of application: **27.09.2023**
(21) Application number: 21913827.8
(22) Date of filing: 09.12.2021
(51) Int. Cl.: H04B 7/0404

(54) **RADIO FREQUENCY FRONT-END MODULE, AND METHOD AND APPARATUS FOR CONTROLLING SAME**

(30) Priority: 29.12.2020 CN 202011599815
(71) Applicant: Huawei Technologies Co., Ltd., Shenzhen, Guangdong 518129 (CN)
(72) Inventor: ZHANG, Ziyan, Shenzhen, Guangdong 518129 (CN)
(74) Representative: Maiwald GmbH
(86) International application number: PCT/CN2021/136830
(87) International publication number: WO 2022/143086

(57) **Abstract**

This application relates to the field of communications technologies, and provides a radio frequency front-end module, and a method and an apparatus for controlling a radio frequency front-end module. The apparatus may be a terminal device such as a tablet computer, a wearable device, or an in-vehicle device. The radio frequency front-end module includes: a first switch module, configured to switch a channel of a transmit signal on a first band; a second switch module, configured to: switch a channel of a transmit signal on a second band, and switch a channel of a diversity receive signal on the second band; a first frequency division combiner, separately coupled to the first switch module and the second switch module; and a second frequency division combiner, separately coupled to the first switch module and the second switch module. The apparatus can prevent an LTE diversity channel from being interrupted when antenna switching is simultaneously performed in LTE and NR.

## Description

This application claims priority to Chinese Patent Application No. 202011599815.8, filed with the China National Intellectual Property Administration on December 29, 2020 and entitled "RADIO FREQUENCY FRONT-END MODULE, AND METHOD AND APPARATUS FOR CONTROLLING RADIO FREQUENCY FRONT-END MODULE", which is incorporated herein by reference in its entirety.

### TECHNICAL FIELD

This application relates to the field of communications technologies, and in particular, to a radio frequency front-end module, and a method and an apparatus for controlling a radio frequency front-end module.

### BACKGROUND

With the development of mobile communications technologies, the 5th generation mobile communications technology (5th generation wireless systems, 5G) has higher transmission efficiency, and therefore is widely applied. In current 5G networking forms, a non-standalone (non-standalone, NSA) networking manner accounts for a quite large proportion. Some operators use a form of long term evolution (long term evolution, LTE) and 5G (new radio, NR) dual connectivity (E-UTRAN new radio-dual connectivity, ENDC) to perform NSA networking.

In an ENDC scenario, a band in the 4th generation mobile communications technology (4th generation wireless systems, 4G) may be used as an anchor frequency to be mainly used for data synchronization, and a 5G band may be used for data transmission. With increasingly powerful functions of a terminal device, a quantity of antennas on the terminal device becomes larger as a quantity of types of standards supported by the terminal device increases and of multiple-input multiple-output (multiple-input multiple-output, MIMO) is used. When a quantity of antennas on the terminal device becomes larger, antenna switching becomes more complex.

### SUMMARY

This application provides a radio frequency front-end module, and a method and an apparatus for controlling a radio frequency front-end module, to ensure that a signal can be completely received or transmitted during antenna switching.

According to a first aspect, a radio frequency front-end module is provided, including:
a first switch module, configured to switch a channel of a transmit signal on a first band;
a second switch module, configured to: switch a channel of a transmit signal on a second band, and switch a channel of a diversity receive signal on the second band;
a first frequency division combiner, separately coupled to the first switch module and the second switch module; and
a second frequency division combiner, separately coupled to the first switch module and the second switch module.

In a first state, the transmit signal on the first band passes through the first switch module and the first frequency division combiner to reach a first antenna, the transmit signal on the second band passes through the first frequency division combiner and the second switch module to reach the first antenna, and the diversity receive signal on the second band passes through a second antenna, the second switch module, and the second frequency division combiner.

In a second state, the transmit signal on the first band passes through the first switch module and the second frequency division combiner to reach the second antenna, the transmit signal on the second band passes through the first frequency division combiner and the second switch module to reach the first antenna, and the diversity receive signal on the second band flows through the second antenna, the second switch module, and the second frequency division combiner.

In this embodiment, the first switch module and the second switch module are used to switch channels of signals on the first band and the second band, so that not only an antenna polling requirement of the first band can be met, but also TAS services of the first band and the second band can be met. Regardless of which antenna is used to radiate the transmit signal on the first band, the two antennas both can couple a received receive signal on the second band to the second frequency division combiner through switching of the second switch module, and then couple, based on gating of the second frequency division combiner, a gated receive signal on the second band to an RFIC as the diversity receive signal on the second band, to ensure that a diversity signal on the second band is not interrupted, thereby ensuring service performance of the second band. In addition, in this embodiment, through the first frequency division combiner and the second frequency division combiner, signals on different bands can share a radio frequency channel and share an antenna, so that a quantity of ports of a switch module and a quantity of antennas are decreased. A decrease in the quantity of ports can further simplify a circuit, and a decrease in the quantity of antennas can improve isolation between antennas in a limited volume of an electronic device, thereby improving a data throughput in a MIMO scenario.

In an embodiment, the first frequency division combiner is coupled to the first antenna or the second antenna by using the second switch module, and the second frequency division combiner is coupled to the second antenna or the first antenna by using the second switch module.

In the first state, the transmit signal on the first band passes through the first switch module, the first frequency division combiner, and the second switch module to reach the first antenna, the transmit signal on the second band passes through the first frequency division combiner and the second switch module to reach the first antenna, and the diversity receive signal on the second band flows through the second antenna, the second switch module, and the second frequency division combiner.

In the second state, the transmit signal on the first band passes through the first switch module, the second frequency division combiner, and the second switch module to reach the second antenna, the transmit signal on the second band passes through the first frequency division combiner and the second switch module to reach the first antenna, and the diversity receive signal on the second band flows through the second antenna, the second switch module, and the second frequency division combiner.

In a third state, the transmit signal on the first band passes through the first switch module, the first frequency division combiner, and the second switch module to reach the second antenna, the transmit signal on the second band passes through the first frequency division combiner and the second switch module to reach the second antenna, and the diversity receive signal on the second band flows through the first antenna, the second switch module, and the second frequency division combiner.

In a fourth state, the transmit signal on the first band passes through the first switch module, the second frequency division combiner, and the second switch module to reach the first antenna, the transmit signal on the second band passes through the first frequency division combiner and the second switch module to reach the first antenna, and the diversity receive signal on the second band flows through the second antenna, the second switch module, and the second frequency division combiner.

In this embodiment, the first switch module and the second switch module are used to switch channels of signals on the first band and the second band, so that not only an antenna polling requirement of the first band can be met, but also TAS services of the first band and the second band can be met. Regardless of which antenna is used to radiate the transmit signal on the first band, the two antennas both can couple a received receive signal on the second band to the second frequency division combiner through switching of the second switch module, and then couple, based on gating of the second frequency division combiner, a gated receive signal on the second band to an RFIC as the diversity receive signal on the second band, to ensure that a diversity signal on the second band is not interrupted, thereby ensuring service performance of the second band. In addition, in this embodiment, through the first frequency division combiner and the second frequency division combiner, signals on different bands can share a radio frequency channel and share an antenna, so that a quantity of ports of a switch module and a quantity of antennas are decreased. A decrease in the quantity of ports can further simplify a circuit, and a decrease in the quantity of antennas can improve isolation between antennas in a limited volume of an electronic device, thereby improving a data throughput in a MIMO scenario.

In an embodiment, the second switch module is coupled to the first antenna by using the first frequency division combiner, and the second frequency division combiner is coupled to the second antenna by using the second switch module.

In a fifth state, the transmit signal on the first band passes through the first switch module and the first frequency division combiner to reach the first antenna, the transmit signal on the second band passes through the second switch module and the first frequency division combiner to reach the first antenna, and the diversity receive signal on the second band flows through the second antenna, the second switch module, and the second frequency division combiner.

In a sixth state, the transmit signal on the first band passes through the first switch module, the second frequency division combiner, and the second switch module to reach the second antenna, the transmit signal on the second band passes through the second switch module and the first frequency division combiner to reach the first antenna, and the diversity receive signal on the second band flows through the second antenna, the second switch module, and the second frequency division combiner.

In this embodiment, the second switch module is coupled to the first antenna by using the first frequency division combiner, and the second frequency division combiner is coupled to the second antenna by using the second switch module. Therefore, regardless of whether the transmit signal on the first band is transmitted by using the first antenna or the second antenna, the transmit signal on the second band can be coupled to the first antenna by using the second switch module and the first frequency division combiner to be transmitted. In addition, the second antenna can couple the received diversity receive signal on the second band to the second switch module, and couple the diversity receive signal on the second band to an RFIC through gating of the second frequency division combiner, to ensure that a diversity receive channel of the second band is connected, so that receiving performance of the second band is not affected, thereby ensuring service performance of the second band.

In an embodiment, the first frequency division combiner is coupled to the first antenna by using the second switch module, and the second switch module is coupled to the second antenna by using the second frequency division combiner.

In a seventh state, the transmit signal on the first band passes through the first switch module, the first frequency division combiner, and the second switch module to reach the first antenna, the transmit signal on the second band passes through the first frequency division combiner and the second switch module to reach the first antenna, and the diversity receive signal on the second band flows through the second antenna, the second frequency division combiner, and the second switch module.

In an eighth state, the transmit signal on the first band passes through the first switch module and the second frequency division combiner to reach the second antenna, the transmit signal on the second band passes through the first frequency division combiner and the second switch module to reach the first antenna, and the diversity receive signal on the second band flows through the second antenna, the second frequency division combiner, and the second switch module.

In this embodiment, the first frequency division combiner is coupled to the first antenna by using the second switch module, and the second switch module is coupled to the second antenna by using the second frequency division combiner. Therefore, regardless of whether the transmit signal on the first band is transmitted by using the first antenna or the second antenna, the transmit signal on the second band can be coupled to the first antenna by using the first frequency division combiner and the second switch module to be transmitted. In addition, the second antenna can couple the received diversity receive signal on the second band to the second frequency division combiner, and couple the diversity receive signal on the second band to an RFIC by using the second switch module through gating of the second frequency division combiner, to ensure that a diversity receive channel of the second band is connected, so that receiving performance of the second band is not affected, thereby ensuring service performance of the second band.

In an embodiment, the first switch module is coupled to the first antenna by using the first frequency division combiner, the first switch module is coupled to the second antenna by using the second frequency division combiner, the second switch module is coupled to the first antenna by using the first frequency division combiner, and the second switch module is coupled to the second antenna by using the second frequency division combiner.

In a ninth state, the transmit signal on the first band passes through the first switch module and the first frequency division combiner to reach the first antenna, the transmit signal on the second band passes through the second switch module and the first frequency division combiner to reach the first antenna, and the diversity receive signal on the second band flows through the second antenna, the second frequency division combiner, and the second switch module.

In a tenth state, the transmit signal on the first band passes through the first switch module and the first frequency division combiner to reach the first antenna, the transmit signal on the second band passes through the second switch module and the second frequency division combiner to reach the second antenna, and the diversity receive signal on the second band flows through the first antenna, the first frequency division combiner, and the second switch module.

In an eleventh state, the transmit signal on the first band passes through the first switch module and the second frequency division combiner to reach the second antenna, the transmit signal on the second band passes through the second switch module and the first frequency division combiner to reach the first antenna, and the diversity receive signal on the second band flows through the second antenna, the second frequency division combiner, and the second switch module.

In a twelfth state, the transmit signal on the first band passes through the first switch module and the second frequency division combiner to reach the second antenna, the transmit signal on the second band passes through the second switch module and the second frequency division combiner to reach the second antenna, and the diversity receive signal on the second band flows through the first antenna, the first frequency division combiner, and the second switch module.

In this embodiment, the first frequency division combiner is coupled to the first antenna by using the second switch module, and the second switch module is coupled to the second antenna by using the second frequency division combiner, so that the first switch module can be completely used to switch channels of the transmit signal and a receive signal on the first band and does not need to switch a channel of a signal on the second band, and the second switch module can be completely used to switch channels of the transmit signal and a receive signal on the second band and does not need to switch a channel of a signal on the first band. Therefore, switch modules through which the two bands respectively flow are completely decoupled. The two bands respectively use independent switch modules to control respective channel switching. When SRS polling, a TAS service, or a multi-antenna switching (multi-transmit antenna switch, MAS) service is performed on the first band, and a TAS service is performed on the second band, there is no conflict between switch logic configurations. Therefore, there is no need to rely on a platform to arbitrate switch logic, thereby reducing a platform requirement and improving compatibility of the radio frequency front-end module. In addition, through decoupling between switches of the first band and the second band, and the first frequency division combiner and the second frequency division combiner, signals on the first band and the second band share a channel and an antenna, thereby decreasing a quantity of antennas, improving isolation between antennas, and further improving a throughput. Moreover, because the switch modules of the two bands are completely decoupled, when there is no conflict between switch configurations, the first band and the second band share an antenna by using the first frequency division combiner and the second frequency division combiner. Therefore, regardless of whether the transmit signal, that is, a 1T4R SRS on the first band (that is, one transmit signal is transmitted on four receive ports in turn) is switched to the first antenna or the second antenna, a channel of a diversity signal on the second band is not interrupted, so that receiving performance and a throughput of the second band are ensured, and a service on the second band is not affected. When the second band is an LTE band, an LTE service is not affected. Therefore, stability of using the LTE band as an anchor frequency in an ENDC scenario can be improved. Further, in this embodiment, stable simultaneous receiving and transmitting are performed on the first band and the second band, so that a primary card and a secondary card can separately use the first band and the second band to perform simultaneous receiving and transmitting. Therefore, a dual receive dual SIM dual standby (dual receive dual SIM dual standby, DR-DSDS) scenario and a dual SIM dual active (dual SIM dual active, DSDA) scenario can be implemented, thereby extending a frequency combination supported by a product, and improving a communication specification of the product in a dual card mode.

In an embodiment, the radio frequency front-end module further includes:
a third switch module, separately coupled to the first frequency division combiner, the first antenna, and the second switch module, and configured to switch a channel between the first frequency division combiner and the first antenna and a channel between the second switch module and the first antenna.

In this embodiment, the transmit signal on the second band and a receive signal on the second band are coupled to the third switch module by using the second switch module, and are radiated by using the first antenna, so that the transmit signal on the second band and the receive signal on the second band do not need to pass through the first frequency division combiner, which improves flexibility of radio frequency channel selection, and improves a product specification. In addition, insertion losses, on a radio frequency channel, of the transmit signal on the second band and the receive signal on the second band can be reduced, to reduce power consumption of the second band during transmission, and improve receiving sensitivity of the second band during receiving. Because a signal may not pass through the frequency division combiner, a problem that a product specification is limited because a signal on a special band cannot pass gating of the frequency division combiner is also avoided, so that the radio frequency front-end module is compatible with more bands, thereby improving product compatibility and further enriching product specifications.

In an embodiment, the radio frequency front-end module further includes:
a fourth switch module, separately coupled to the second frequency division combiner, the second antenna, and the second switch module, and configured to switch a channel between the second frequency division combiner and the second antenna and a channel between the second switch module and the second antenna

In this embodiment, the transmit signal on the second band and a receive signal on the second band are coupled to the fourth switch module by using the second switch module, and are radiated by using the second antenna, so that the transmit signal on the second band and the receive signal on the second band do not need to pass through the second frequency division combiner, which improves flexibility of radio frequency channel selection, and improves a product specification. In addition, insertion losses, on a radio frequency channel, of the transmit signal on the second band and the receive signal on the second band can be reduced, to reduce power consumption of the second band during transmission, and improve receiving sensitivity of the second band during receiving. Because a signal may not pass through the frequency division combiner, a problem that a product specification is limited because a signal on a special band cannot pass gating of the frequency division combiner is also avoided, so that the radio frequency front-end module is compatible with more bands, thereby improving product compatibility and further enriching product specifications.

In an embodiment, the radio frequency front-end module further includes:
a fifth switch module, configured to switch the channel of the transmit signal on the first band and a channel of a diversity receive signal on the first band.

In this embodiment, because the fifth switch module is coupled to a third antenna and a fourth antenna, a signal on the first band can be switched between the third antenna and the fourth antenna through switching of the fifth switch module, thereby meeting a requirement of polling four antennas on the first band. Therefore, an application scenario is wider. When any antenna is used to radiate a signal on the first transmit band, another antenna inputs a receive signal on the first band to an RFIC 2 through a MIMO main receive channel (N41 MPRX) and a MIMO diversity receive channel (N41 MDRX). In addition, the third antenna or the fourth antenna may further input the diversity receive signal on the first band to an RFIC through switching of the fifth switch module, thereby ensuring receiving performance of the first band.

In an embodiment, the first switch module is a three-pole three-throw switch module, and the second switch module is a double-pole four-throw switch module.

In an embodiment, the first band includes an N40 or N41 band in a 5th generation mobile communications technology 5G standard, and the second band includes a long term evolution LTE band in a 4th generation mobile communications technology 4G standard.

In this embodiment, because an LTE diversity channel is not interrupted, an LTE service is not affected, so that stability of using an LTE band as an anchor frequency in an ENDC scenario can be improved.

In an embodiment, the transmit signal on the first band is a sounding reference signal SRS.

In this embodiment, when the transmit signal on the first band is a 1T4R SRS, because switch modules of the first band and the second band are completely decoupled, there is no conflict between switch logic configurations. Therefore, there is no need to rely on a platform to arbitrate switch logic, thereby reducing a platform requirement and improving compatibility of the radio frequency front-end module. When there is no conflict between switch configurations, the first band and the second band share an antenna during the SRS by using the first frequency division combiner and the second frequency division combiner. Therefore, regardless of whether the SRS on the first band is switched to the first antenna or the second antenna, a channel of a diversity signal on the second band is not interrupted, so that receiving performance and a throughput of the second band are ensured, and a service on the second band is not affected.

In an embodiment, the transmit signal on the first band and a receive signal on the first band are service signals of a first card, a receive signal on the second band is a listening signal of a second card, the receive signal on the first band includes a main receive signal on the first band and/or the diversity receive signal on the first band, and the receive signal on the second band includes a main receive signal on the second band and/or the diversity receive signal on the second band.

In this embodiment, the first card may be a primary card, the second card is a secondary card, the primary card is used as a service card, and the secondary card is used as a listening card, so that a dual SIM dual standby scenario can be implemented.

In an embodiment, the transmit signal on the first band and a receive signal on the first band are service signals of a first card, the transmit signal on the second band and a receive signal on the second band are service signals of a second card, the receive signal on the first band includes a main receive signal on the first band and/or the diversity receive signal on the first band, and the receive signal on the second band includes a main receive signal on the second band and/or the diversity receive signal on the second band.

In this embodiment, the first card may be a primary card, the second card is a secondary card, the primary card is used as a service card, and the secondary card may also be used as a service card, so that a dual SIM dual active scenario can be implemented.

According to a second aspect, a method for controlling a radio frequency front-end module is provided, applied to a radio frequency front-end module including a first switch module, a second switch module, a first frequency division combiner, and a second frequency division combiner. The first frequency division combiner is separately coupled to the first switch module and the second switch module, and the second frequency division combiner is separately coupled to the first switch module and the second switch module.

The method includes:
in a first state, controlling a transmit signal on a first band to pass through the first switch module and the first frequency division combiner to reach a first antenna, controlling a transmit signal on a second band to pass through the first frequency division combiner and the second switch module to reach the first antenna, and controlling a diversity receive signal on the second band to pass through a second antenna, the second switch module, and the second frequency division combiner; and
in a second state, controlling the transmit signal on the first band to pass through the first switch module and the second frequency division combiner to reach the second antenna, controlling the transmit signal on the second band to pass through the first frequency division combiner and the second switch module to reach the first antenna, and controlling the diversity receive signal on the second band to flow through the second antenna, the second switch module, and the second frequency division combiner.

In an embodiment, the first frequency division combiner is coupled to the first antenna or the second antenna by using the second switch module, and the second frequency division combiner is coupled to the second antenna or the first antenna by using the second switch module.

The method further includes: in the first state, controlling the transmit signal on the first band to pass through the first switch module, the first frequency division combiner, and the second switch module to reach the first antenna, controlling the transmit signal on the second band to pass through the first frequency division combiner and the second switch module to reach the first antenna, and controlling the diversity receive signal on the second band to flow through the second antenna, the second switch module, and the second frequency division combiner;
in the second state, controlling the transmit signal on the first band to pass through the first switch module, the second frequency division combiner, and the second switch module to reach the second antenna, controlling the transmit signal on the second band to pass through the first frequency division combiner and the second switch module to reach the first antenna, and controlling the diversity receive signal on the second band to flow through the second antenna, the second switch module, and the second frequency division combiner;
in a third state, controlling the transmit signal on the first band to pass through the first switch module, the first frequency division combiner, and the second switch module to reach the second antenna, controlling the transmit signal on the second band to pass through the first frequency division combiner and the second switch module to reach the second antenna, and controlling the diversity receive signal on the second band to flow through the first antenna, the second switch module, and the second frequency division combiner; and
in a fourth state, controlling the transmit signal on the first band to pass through the first switch module, the second frequency division combiner, and the second switch module to reach the first antenna, controlling the transmit signal on the second band to pass through the first frequency division combiner and the second switch module to reach the first antenna, and controlling the diversity receive signal on the second band to flow through the second antenna, the second switch module, and the second frequency division combiner.

In an embodiment, the second switch module is coupled to the first antenna by using the first frequency division combiner, and the second frequency division combiner is coupled to the second antenna by using the second switch module.

The method further includes: in a fifth state, controlling the transmit signal on the first band to pass through the first switch module and the first frequency division combiner to reach the first antenna, controlling the transmit signal on the second band to pass through the second switch module and the first frequency division combiner to reach the first antenna, and controlling the diversity receive signal on the second band to flow through the second antenna, the second switch module, and the second frequency division combiner; and
in a sixth state, controlling the transmit signal on the first band to pass through the first switch module, the second frequency division combiner, and the second switch module to reach the second antenna, controlling the transmit signal on the second band to pass through the second switch module and the first frequency division combiner to reach the first antenna, and controlling the diversity receive signal on the second band to flow through the second antenna, the second switch module, and the second frequency division combiner.

In an embodiment, the first frequency division combiner is coupled to the first antenna by using the second switch module, and the second switch module is coupled to the second antenna by using the second frequency division combiner.

The method further includes: in a seventh state, controlling the transmit signal on the first band to pass through the first switch module, the first frequency division combiner, and the second switch module to reach the first antenna, controlling the transmit signal on the second band to pass through the first frequency division combiner and the second switch module to reach the first antenna, and controlling the diversity receive signal on the second band to flow through the second antenna, the second frequency division combiner, and the second switch module; and
in an eighth state, controlling the transmit signal on the first band to pass through the first switch module and the second frequency division combiner to reach the second antenna, controlling the transmit signal on the second band to pass through the first frequency division combiner and the second switch module to reach the first antenna, and controlling the diversity receive signal on the second band to flow through the second antenna, the second frequency division combiner, and the second switch module.

In an embodiment, the first switch module is coupled to the first antenna by using the first frequency division combiner, the first switch module is coupled to the second antenna by using the second frequency division combiner, the second switch module is coupled to the first antenna by using the first frequency division combiner, and the second switch module is coupled to the second antenna by using the second frequency division combiner.

The method further includes: in a ninth state, controlling the transmit signal on the first band to pass through the first switch module and the first frequency division combiner to reach the first antenna, controlling the transmit signal on the second band to pass through the second switch module and the first frequency division combiner to reach the first antenna, and controlling the diversity receive signal on the second band to flow through the second antenna, the second frequency division combiner, and the second switch module;
in a tenth state, controlling the transmit signal on the first band to pass through the first switch module and the first frequency division combiner to reach the first antenna, controlling the transmit signal on the second band to pass through the second switch module and the second frequency division combiner to reach the second antenna, and controlling the diversity receive signal on the second band to flow through the first antenna, the first frequency division combiner, and the second switch module;
in an eleventh state, controlling the transmit signal on the first band to pass through the first switch module and the second frequency division combiner to reach the second antenna, controlling the transmit signal on the second band to pass through the second switch module and the first frequency division combiner to reach the first antenna, and controlling the diversity receive signal on the second band to flow through the second antenna, the second frequency division combiner, and the second switch module; and
in a twelfth state, controlling the transmit signal on the first band to pass through the first switch module and the second frequency division combiner to reach the second antenna, controlling the transmit signal on the second band to pass through the second switch module and the second frequency division combiner to reach the second antenna, and controlling the diversity receive signal on the second band to flow through the first antenna, the first frequency division combiner, and the second switch module.

In an embodiment, the radio frequency front-end module further includes a third switch module, separately coupled to the first frequency division combiner, the first antenna, and the second switch module. The method further includes: controlling the third switch module to switch a channel between the first frequency division combiner and the first antenna and a channel between the second switch module and the first antenna.

In an embodiment, the radio frequency front-end module further includes a fourth switch module, separately coupled to the second frequency division combiner, the second antenna, and the second switch module.

The method further includes: controlling the fourth switch module to switch a channel between the second frequency division combiner and the second antenna and a channel between the second switch module and the second antenna.

In an embodiment, the radio frequency front-end module further includes a fifth switch module, and the method further includes: controlling the fifth switch module to switch a channel of the transmit signal on the first band and a channel of a diversity receive signal on the first band.

In an embodiment, the first switch module is a three-pole three-throw switch module, and the second switch module is a double-pole four-throw switch module.

In an embodiment, the first band includes an N40 or N41 band in a 5th generation mobile communications technology 5G standard, and the second band includes a long term evolution LTE band in a 4th generation mobile communications technology 4G standard.

In an embodiment, the transmit signal on the first band is a sounding reference signal SRS.

In an embodiment, the transmit signal on the first band and a receive signal on the first band are service signals of a first card, a receive signal on the second band is a listening signal of a second card, the receive signal on the first band includes a main receive signal on the first band and/or the diversity receive signal on the first band, and the receive signal on the second band includes a main receive signal on the second band and/or the diversity receive signal on the second band.

In an embodiment, the transmit signal on the first band and a receive signal on the first band are service signals of a first card, the transmit signal on the second band and a receive signal on the second band are service signals of a second card, the receive signal on the first band includes a main receive signal on the first band and/or the diversity receive signal on the first band, and the receive signal on the second band includes a main receive signal on the second band and/or the diversity receive signal on the second band.

According to a third aspect, an apparatus for controlling a radio frequency front-end module is provided, including a control module, configured to perform any method in the technical solution according to the second aspect.

According to a fourth aspect, an apparatus for controlling a radio frequency front-end module is provided, including a processor, a memory, and an interface.

The processor is separately coupled to the memory and the interface, the interface is separately coupled to a first switch module and a second switch module, and the processor is configured to perform any method in the technical solution according to the second aspect.

According to a fifth aspect, an electronic device is provided, including the radio frequency front-end module according to any embodiment of the technical solution according to the first aspect, and the apparatus according to the third aspect or the fourth aspect.

According to a sixth aspect, a computer-readable storage medium is provided. The computer-readable storage medium stores a computer program, and when the computer program is executed by a processor, the processor is enabled to perform any method in the technical solution according to the second aspect.

According to a seventh aspect, a computer program product is provided. The computer program product includes computer program code, and when the computer program code is run on an apparatus, the apparatus is enabled to perform any method in the technical solution according to the second aspect.

### BRIEF DESCRIPTION OF DRAWINGS

FIG. 1 is a schematic diagram of an architecture of an example mobile communication system according to an embodiment of this application;
FIG. 2 is a block diagram of a structure of a wireless communication system of an example electronic device according to an embodiment of this application;
FIG. 3 is a block diagram of a circuit of an example radio frequency front-end module according to an embodiment of this application;
FIG. 4 is a schematic diagram of a signal path in an example MIMO scenario according to an embodiment of this application;
FIG. 5 is a schematic diagram of a structure of an example radio frequency front-end module according to an embodiment of this application;
FIG. 6 is a schematic diagram of a structure of an example radio frequency front-end module according to an embodiment of this application;
FIG. 7 is a block diagram of a circuit of an example radio frequency front-end module according to an embodiment of this application;
FIG. 8 is a block diagram of a circuit of another example radio frequency front-end module according to an embodiment of this application;
FIG. 9 is a block diagram of a circuit of another example radio frequency front-end module according to an embodiment of this application;
FIG. 10 is a block diagram of a circuit of another example radio frequency front-end module according to an embodiment of this application;
FIG. 11 is a block diagram of a circuit of another example radio frequency front-end module according to an embodiment of this application;
FIG. 12 is a block diagram of a circuit of another example radio frequency front-end module according to an embodiment of this application;
FIG. 13 is a block diagram of a circuit of another example radio frequency front-end module according to an embodiment of this application;
FIG. 14 is a block diagram of a circuit of another example radio frequency front-end module according to an embodiment of this application;
FIG. 15 is a block diagram of a circuit of another example radio frequency front-end module according to an embodiment of this application;
FIG. 16 is a schematic diagram of a signal flow direction in an example radio frequency front-end module according to an embodiment of this application;
FIG. 17 is a schematic diagram of a signal flow direction in another example radio frequency front-end module according to an embodiment of this application;
FIG. 18 is a schematic diagram of a signal flow direction in another example radio frequency front-end module according to an embodiment of this application;
FIG. 19 is a schematic diagram of a signal flow direction in another example radio frequency front-end module according to an embodiment of this application;
FIG. 20 is a schematic diagram of a signal flow direction in another example radio frequency front-end module according to an embodiment of this application;
FIG. 21 is a schematic diagram of a signal flow direction in another example radio frequency front-end module according to an embodiment of this application; and
FIG. 22 is a schematic diagram of a structure of an example apparatus for controlling a radio frequency front-end module according to an embodiment of this application.

### DESCRIPTION OF EMBODIMENTS

The following describes the technical solutions in embodiments of this application with reference to the accompanying drawings in embodiments of this application. In the descriptions in embodiments of this application, "/" means "or" unless otherwise specified. For example, A/B may represent A or B. In this specification, "and/or" is merely an association relationship for describing associated objects and represents that three relationships may exist. For example, A and/or B may represent the following three cases: Only A exists, both A and B exist, and only B exists. In addition, in the descriptions in embodiments of this application, "a plurality of" means two or more.

In the following, the terms "first", "second", "third", and "fourth", and "fifth" are merely used for description, and shall not be understood as an indication or implication of relative importance or an implicit indication of a quantity of indicated technical features. Therefore, a feature limited by "first", "second", "third", "fourth", or "fifth" may explicitly or implicitly include one or more features.

The radio frequency front-end module, and the method and apparatus for controlling the radio frequency front-end module, provided in the embodiments of this application, may be applied to terminal devices such as a mobile phone, a tablet computer, a wearable device, an in-vehicle device, an intelligent vehicle, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), and a smart television. A specific type of the terminal device is not limited in the embodiments of this application.

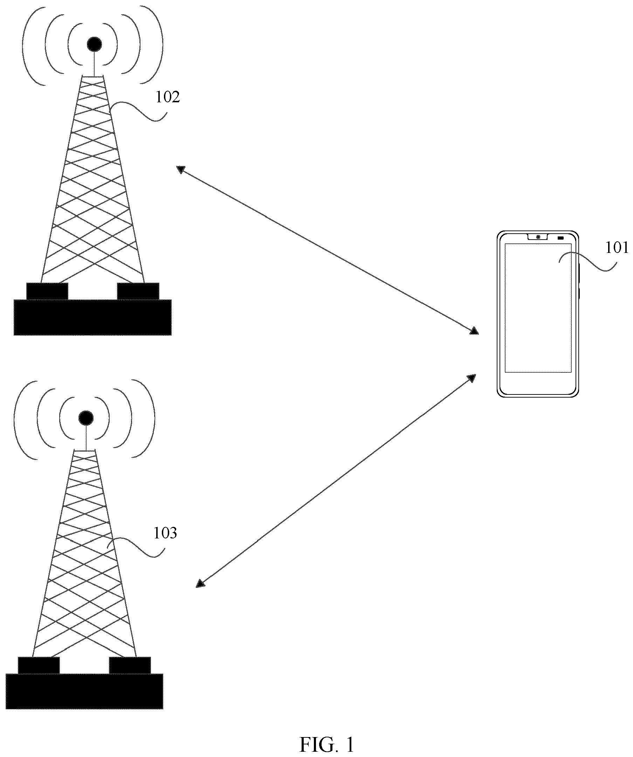

FIG. 1 is a schematic diagram of an architecture of a mobile communication system applicable to an embodiment of this application. As shown in FIG. 1, an electronic device 101 in the mobile communication system may perform simultaneous receiving and transmitting with network devices in a plurality of standards. For example, the mobile communication system may include the electronic device 101, an LTE eNodeB 102, and an NR gNodeB 103. The electronic device 101 may simultaneously communicate with the LTE eNodeB 102 and the NR gNodeB 103. The LTE eNodeB 102 and the NR gNodeB 103 are network devices in two standards.

The electronic device 101 may be an access terminal, a subscriber unit, a subscriber station, a mobile station, a mobile console, a remote station, a remote terminal, a mobile device, a user terminal, a terminal, a wireless communication device, a user agent, a user apparatus, or the like. The electronic device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, an in-vehicle device, a wearable device, an electronic device in a future 5G network, or an electronic device in a future evolved public land mobile network (public land mobile network, PLMN). This is not limited in this embodiment of this application.

Optionally, in a case of NSA, the communication system may further include a core network. The core network may be a 4G core network or a 5G core network. The electronic device in a connected state may simultaneously use radio resources of at least two different base stations (which are classified into a primary station and a secondary station). However, the NR gNodeB 103 cannot directly establish a connection to the core network, and the NR gNodeB 103 needs to be connected to the core network by using the LTE eNodeB 102. In this case, a user plane and a control plane of the NR gNodeB 103 may need to be connected by using the LTE eNodeB. In another case, the user plane of the NR gNodeB 103 may be connected to the core network, and the control plane of the NR gNodeB 103 is still connected to the LTE eNodeB 102. In other words, the electronic device 101 needs to simultaneously communicate with the LTE eNodeB 102 and the NR gNodeB 103 to obtain information.

Optionally, in another NSA networking possibility, the core network may be a 5G core network, the user plane and the control plane of the NR gNodeB 103 are connected to the core network, a control plane of the LTE eNodeB 102 may be connected to the NR gNodeB 103, and a user plane of the LTE eNodeB 102 may be connected to the core network or the NR gNodeB.

For a sub-6G band (for example, a 3.5G band or a 5G band) in a 5G network, there is a great spatial attenuation in a transmission process, and the electronic device is easily limited in uplink during use, especially in a scenario in which a human's head and hand and another human body shields an antenna. However, when a transmit antenna is switched to an area that is not held by a human body, performance of the electronic device can be effectively improved, and therefore this is an effective method for improving user experience.

In an NSA networking scenario, radio frequency channel control logic of LTE and radio frequency channel control logic of NR in a terminal device are two independent running mechanisms. When antenna switching is simultaneously performed in the two standards, that is, LTE and NR, in the terminal device, simultaneous delivery exists in an ENDC scenario. If an NR transmit antenna is switched to an LTE diversity antenna, an LTE diversity channel is interrupted. Consequently, receiving performance of LTE is affected, and an LTE service is affected. In addition, when the electronic device sends a sounding reference signal (sounding reference signal, SRS), the electronic device is required to have a capability of switching between a plurality of antennas, to send the sounding reference signal in turn.

Therefore, this application provides a solution with better performance, to resolve a multi-antenna switching problem.

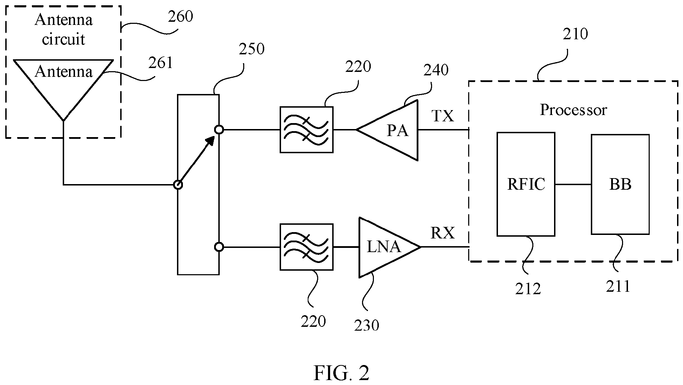

FIG. 2 is a block diagram of a structure of a wireless communication system of an electronic device. The electronic device may include a processor 210, a filter 220, a low noise amplifier (low noise amplifier, LNA) 230, a power amplifier (power amplifier, PA) 240, a switching switch 250, and an antenna circuit 260. The antenna circuit 260 includes at least one antenna 261.

The processor 210 may include one or more processing units. For example, the processor 210 may include an application processor (application processor, AP), a modem processor, a graphics processing unit (graphics processing unit, GPU), an image signal processor (image signal processor, ISP), a neural-network processing unit (neural-network processing unit, NPU), a controller, a video codec, a digital signal processor (digital signal processor, DSP), a baseband (baseband, BB), and/or a radio frequency integrated circuit. The controller may generate an operation control signal based on instruction operation code and a time sequence signal, to complete control of instruction fetching and instruction execution.

A memory may be disposed in the processor 210, and is configured to store instructions and data. In some embodiments, the memory in the processor 210 includes a cache. The memory may store instructions or data just used or cyclically used by the processor 210. If the processor 210 needs to use the instructions or the data again, the processor 210 may directly invoke the instructions or the data from the memory. This avoids repeated access and reduces waiting time of the processor 210, thereby improving system efficiency. In some embodiments, the memory may alternatively be disposed outside the processor and coupled to the processor 210.

A BB 211 is configured to synthesize a baseband signal to be transmitted, or/and is configured to decode a received baseband signal. Specifically, during transmission, the baseband encodes a voice signal or another data signal into a baseband signal (baseband code) for transmission; and during receiving, the baseband decodes a received baseband signal (baseband code) into a voice signal or another data signal. The BB 211 may include components such as an encoder, a decoder, and a baseband processor. The encoder is configured to synthesize a baseband signal to be transmitted, and the decoder is configured to decode a received baseband signal. The baseband processor may be a microprocessor (microcontroller unit, MCU). The baseband processor may be configured to control the encoder and the decoder. For example, the baseband processor may be configured to complete scheduling of encoding and decoding, communication between the encoder and the decoder, driving of a peripheral component (the baseband processor may send an enable signal to a component outside the baseband, to enable the component outside the baseband), and the like.

A radio frequency integrated circuit (radio frequency integrated circuit, RFIC) 212 is configured to process a baseband signal to form a transmit (transmit, TX) signal, and transfer the transmit signal to the power amplifier 240 for amplification; or/and the radio frequency integrated circuit is configured to process a receive (receive, RX) signal to form a baseband signal, and send the formed baseband signal to the BB 211 for decoding.

The processor 210 may perform frequency modulation on a signal based on a mobile communications technology or a wireless communications technology. The mobile communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), an emerging wireless communications technology (which may also be referred to as a fifth generation mobile communications technology, English: 5th generation mobile networks or 5th generation wireless systems, Sth-Generation, or 5th-Generation New Radio, 5G, a 5G technology, or 5G NR for short), and the like. The wireless communications technology may include a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like.

The processor 210 may include at least one BB 211 and at least one radio frequency integrated circuit 212. In some embodiments, each BB 211 corresponds to one radio frequency integrated circuit, to perform frequency modulation on a signal based on one or more communications technologies. For example, a first baseband and a first radio frequency integrated circuit perform frequency modulation on a signal based on a 5G technology, a second baseband and a second radio frequency integrated circuit perform frequency modulation on a signal based on a 4G technology, a third baseband and a third radio frequency integrated circuit perform frequency modulation on a signal based on a Wi-Fi technology, a fourth baseband and a fourth radio frequency integrated circuit perform frequency modulation on a signal based on a Bluetooth technology, and so on. Alternatively, the first baseband and the first radio frequency integrated circuit may perform frequency modulation on a signal based on both the 4G technology and the 5G technology, the second baseband and the second radio frequency integrated circuit perform frequency modulation on a signal based on the Wi-Fi technology, and so on. In some embodiments, one baseband may alternatively correspond to a plurality of radio frequency integrated circuits, to improve integration.

In some embodiments, the BB 211 and the radio frequency integrated circuit 212 may be integrated into an integrated circuit with another component of the processor 210. In some embodiments, the BB 211 and the radio frequency integrated circuit 212 each may be an independent component independent of the processor 210. In some embodiments, one BB 211 and one radio frequency integrated circuit 212 may be integrated into a component independent of the processor 210. In some embodiments, the BB 211 and the radio frequency integrated circuit 212 are integrated in different integrated circuits, and the BB 211 and the radio frequency integrated circuit 212 are packaged together, for example, packaged in a system on a chip (system on a chip, SOC).

In the processor 210, different processing units may be independent components, or may be integrated into one or more integrated circuits.

The antenna circuit 260 is configured to transmit and receive an electromagnetic wave signal (a radio frequency signal). The antenna circuit 260 may include a plurality of antennas 261 or a plurality of groups of antennas (the plurality of groups of antennas include more than two antennas), and each antenna 261 or the plurality of groups of antennas may be configured to cover one or more communication bands. The plurality of antennas each may be one or more of a multi-frequency antenna, an array antenna, or an on-chip (on-chip) antenna.

The processor 210 is coupled to the antenna circuit 260, to implement various functions associated with transmitting and receiving of a radio frequency signal. For example, when the electronic device transmits a signal, the BB 211 synthesizes to-be-transmitted data (a digital signal) into a to-be-transmitted baseband signal. The baseband signal is converted by the radio frequency integrated circuit 212 into a transmit signal (a radio frequency signal). The transmit signal is amplified by the power amplifier 4240. An amplified output signal that is output by the power amplifier 240 is transferred to the switching switch 250, and is transmitted by using the antenna circuit 260. A path through which the processor 210 sends the transmit signal to the switching switch 250 is a transmit channel (or referred to as a transmit path or a transmit link). When the electronic device needs to receive a signal, the antenna circuit 260 sends a receive signal (a radio frequency signal) to the switching switch 250, the switching switch 250 sends the radio frequency signal to the radio frequency integrated circuit 212, the radio frequency integrated circuit 212 processes the radio frequency signal into a baseband signal and sends the baseband signal to the BB 211, and the BB 211 converts the processed baseband signal into data and then sends the data to a corresponding application processor. A path through which switching switch 250 sends the radio frequency signal to the processor 210 is a receive channel (or referred to as a receive path or a receive link). In the processor 210, a port coupled to a transmit channel is a transmit port TX; and in the processor 210, a port coupled to a receive channel is a receive port RX.

The switching switch 250 may be configured to selectively couple the antenna circuit 260 to a transmit channel or a receive channel. In some embodiments, the switching switch 250 may include a plurality of switches. The switching switch 250 may also be configured to provide additional functions. The coupling in this embodiment of this application may include a connection state in which a signal is transferred through a direct connection, or may include a connection state in which no direct connection exists and a signal is transferred through spatial coupling.

In some other embodiments of this application, the communication system of the electronic device may include more or fewer components than those shown in the figure, or combine some components, or split some components, or have different component arrangements. The components shown in the figure may be implemented by hardware, software, or a combination of software and hardware. Each transmit channel or each receive channel may be understood as a transmission channel.

In addition, FIG. 2 illustrates only one antenna in the electronic device. Actually, at least two antennas are usually disposed in the electronic device. For example, four antennas are disposed, and the four antennas may simultaneously receive, by using different receive channels, a downlink signal transmitted by a base station. In other words, four transmit paths may be established between the base station and the electronic device. When wireless communication is implemented between the electronic device and the base station, to enable the base station to control data transmission on different transmit paths to implement more efficient downlink data transmission, a channel status of each transmit path needs to be obtained. An obtaining manner may be sending a sounding reference signal (sounding reference signal, SRS) to the base station by using an antenna, that is, the SRS is used by the base station to obtain a channel status of a transmit path corresponding to the antenna. In addition, there are a small quantity of transmit channels in the electronic device, for example, the four antennas have only one or two transmit channels. In this case, the SRS needs to be sent in turn. To be specific, the transmit channel is switched to each antenna by using a switching switch, so that each antenna sends the SRS in turn once. Although only one antenna or two antennas transmit the SRS at a same moment, provided that all antennas send the SRS once, the base station can obtain channel statuses of transmit paths corresponding to the four antennas.

For ease of understanding, in the following embodiments of this application, with reference to the accompanying drawings and application scenarios, the electronic device mentioned above is used as an example to describe in detail a radio frequency front-end module, a method for controlling a radio frequency front-end module, and a related product that are provided in the embodiments of this application. The electronic device designed in the embodiments of this application may be a common terminal device, for example, a smartphone, a tablet computer, a wearable device, or an in-vehicle device.

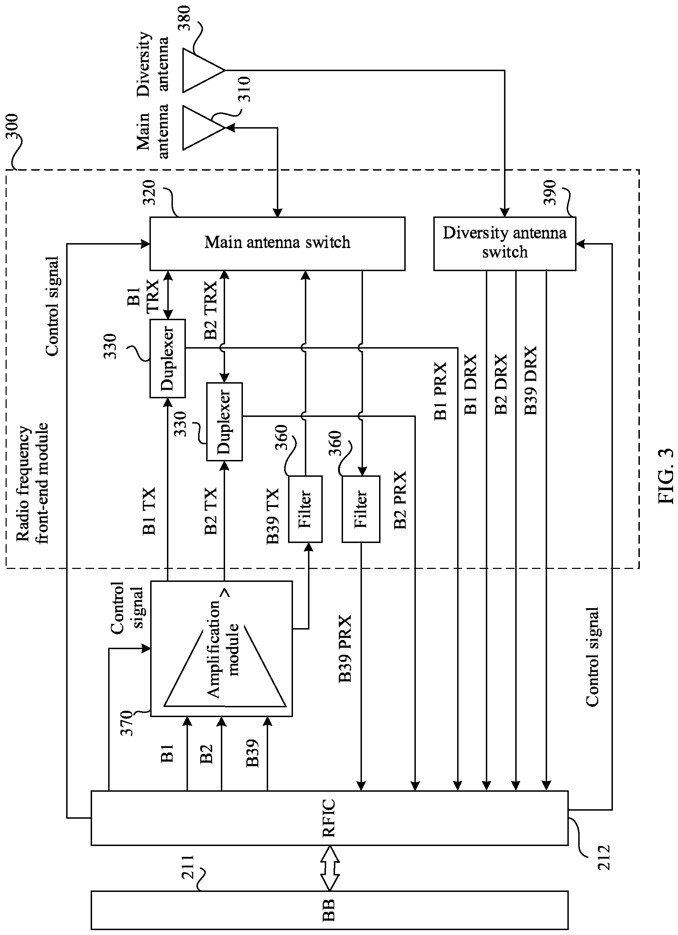

In a transceiver system circuit of a terminal device, a radio frequency front-end module implements combination, division, channel switching, and the like for receive/transmit signals on different bands. Therefore, proper channel compatibility of the radio frequency front-end module directly affects a product specification. FIG. 3 is a block diagram of a circuit applied to a radio frequency front-end module 300 in an actual circuit. In FIG. 3, TX represents a transmit channel, TRX represents a transmit/receive common channel of a time division band, PRX represents a main receive channel, and DRX represents a diversity receive channel, where "T" represents transmit (transmit), "R" represents "receive" (receive), and "X" represents "to be crossed", to be specific, RX of a base station receives TX of an electronic device, or RX of the electronic device receives TX of the base station. B represents a band (BAND) in LTE or WCDMA. For example, B1 represents LTE BAND 1 or WCDMA BAND 1, and B7 represents LTE BAND 7. When a main antenna 310 receives a receive signal, the receive signal enters the radio frequency front-end module 300, and is switched to a corresponding receive channel in the radio frequency front-end module 300 by using a main antenna switch 320. In a case of a frequency division band, for example, B1, B2, B3, B7, or another band, where B1 and B2 are used as examples for illustration in FIG. 3, when the electronic device uses B1 to communicate with the base station, the main antenna switch 320 switches the receive signal to a B1 TRX channel, a main receive signal on B1 is input to the RFIC 212 by using a duplexer 330 for processing such as amplification, filtering, or frequency mixing, and then a processed signal is input to the BB 211 for demodulation. If a current receive signal is on a time division band, for example, B39, a receive signal on B39 is switched to a corresponding main receive channel B39 PRX of B39 by using the main antenna switch 320, and is filtered by a filter 360 corresponding to the band and then enters the RFIC 212. When receiving a transmit signal output by the BB 211, the RFIC 212 performs processing such as frequency mixing, amplification, or filtering on the transmit signal, and outputs the transmit signal to a corresponding transmit channel by using a pin corresponding to a band of the transmit signal, and the transmit signal enters an amplification module 370 for power amplification. In a case of a frequency division band, for example, B1, an amplified transmit signal is switched to a main common channel through a B1 TX channel in the radio frequency front-end module by using the duplexer 330 and the main antenna switch 320, and is radiated by using the main antenna 310. In a case of a frequency division band, for example, B39, the amplified transmit signal passes through the filter 360, is switched to the main common channel by using the main antenna switch 320, and is radiated by using the main antenna 310. When a diversity antenna 380 receives a receive signal, a diversity antenna switch 390 switches the receive signal to a diversity receive channel corresponding to a band. For example, when the electronic device currently uses B1 to communicate with the base station, the diversity receive signal is switched to a B1 DRX channel shown in FIG. 3 to enter a corresponding pin of the RFIC 212, and then is sent to the BB 211 for demodulation. If the electronic device currently uses B39 to communicate with the base station, the diversity receive signal is switched to a B39 DRX channel to enter a corresponding pin of RFIC 212. In addition, the RFIC 212, the BB 211, or the processor 210 may further control the main antenna switch 310 or the diversity antenna switch 390 by using a control signal that is output through a control line, to control the switch to switch to different channels. Moreover, the RFIC 212, the BB 211, or the processor 210 may further output a control signal to a component such as the amplification module 370 through a control line, to control a gain level of the amplification module. Further, types and a quantity of bands shown in FIG. 3 are merely examples. In some embodiments, based on FIG. 3, more transmit channels and more receive channels may be included based on a product specification, and some radio frequency channels may be combined or split for the plurality of transmit channels or the plurality of receive channels by using a switch module, for example, a main antenna switch, a diversity antenna switch, or a duplexer. A component such as a filter or a switch module may be further configured on the radio frequency channel based on a requirement of a specific band. The radio frequency channel may include a transmit channel and a receive channel of a radio frequency signal. The circuit structure shown in FIG. 3 constitutes no limitation on an application scenario of the radio frequency front-end module in this embodiment of this application.

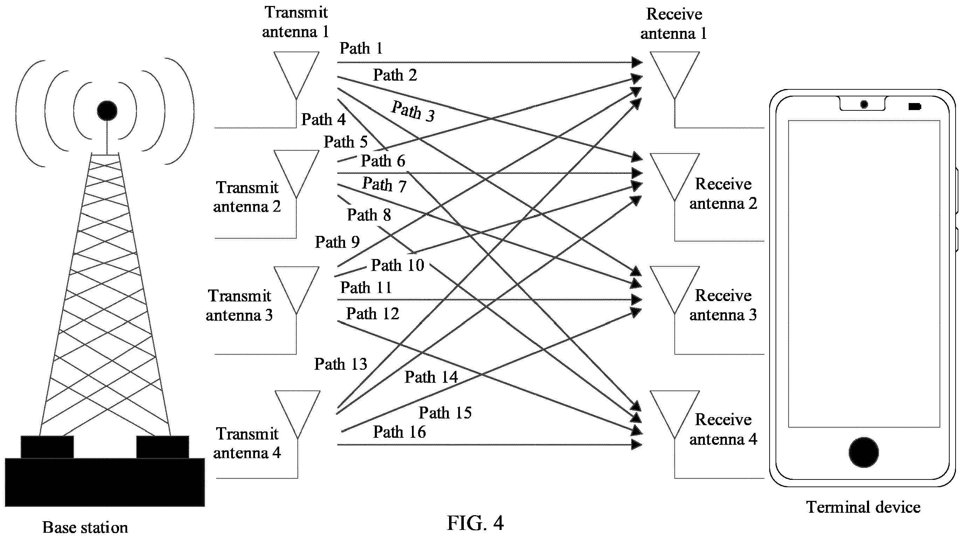

As the mobile communications technology is increasingly updated, big data transmission scenarios are increasingly widely used, and people have an increasingly high requirement for data transmission efficiency and a data transmission amount. Frequency resources are especially precious for mobile communication. In LTE networking, the multiple-input multiple-output (multiple-input multiple-output, MIMO) technology can greatly improve channel capacity and increases a data throughput. An antenna form applied to MIMO is an antenna system in which a transmit end and a receive end both use a plurality of antennas to form a plurality of transmit/receive paths between transmit and receive devices. As shown in FIG. 4, in FIG. 4, for example, a transmit end using a base station as an example and a receive end using a terminal device as an example each have four antennas. The base station performs transmission by using a transmit antenna 1, a transmit antenna 2, a transmit antenna 3, and a transmit antenna 4, and the terminal device receives a signal by using a receive antenna 1, a receive antenna 2, a receive antenna 3, and a receive antenna 4. In FIG. 4, a propagation path between the transmit antenna 1 and the receive antenna 1 is used as a path 1, a propagation path between the transmit antenna 1 and the receive antenna 2 is used as a path 2, a propagation path between the transmit antenna 1 and the receive antenna 3 is used as a path 3, a propagation path between the transmit antenna 1 and the receive antenna 4 is used as a path 4, a propagation path between the transmit antenna 2 and the receive antenna 1 is used as a path 5, a propagation path between the transmit antenna 2 and the receive antenna 2 is used as a path 6, a propagation path between the transmit antenna 2 and the receive antenna 3 is used as a path 7, a propagation path between the transmit antenna 2 and the receive antenna 4 is used as a path 8, a propagation path between the transmit antenna 3 and the receive antenna 1 is used as a path 9, a propagation path between the transmit antenna 3 and the receive antenna 2 is used as a path 10, a propagation path between the transmit antenna 3 and the receive antenna 3 is used as a path 11, and a propagation path between the transmit antenna 3 and the receive antenna 4 is used as a path 12, a propagation path between the transmit antenna 4 and the receive antenna 1 is used as a path 13, a propagation path between the transmit antenna 4 and the receive antenna 2 is used as a path 14, a propagation path between the transmit antenna 4 and the receive antenna 3 is used as a path 15, and a propagation path between the transmit antenna 4 and the receive antenna 4 is used as a path 16. There are 16 paths for data transmission in a transceiver system of the base station and the terminal device. Certainly, in a same terminal device, antennas used for receiving and transmitting are shared. Signals on different bands may be simultaneously received by using a plurality of antennas, or signals may be simultaneously transmitted by using the plurality of antennas. Although a MIMO system has high spectrum utilization efficiency, there is a high requirement for antenna isolation. If isolation between antennas does not meet the requirement, a data throughput is severely affected.

With popularization and promotion of a 5G network, an NR technology of the 5G network is widely used. Currently, there are two 5G networking modes: NSA networking and standalone (standalone, SA) networking. In an NSA networking scenario, a radio frequency front-end module usually needs to perform simultaneous receiving and transmitting in dual standards: NR and LTE, that is, a signal in the NR standard and a signal in the LTE standard may be simultaneously sent or simultaneously received. In addition, in NR, sounding reference signal (sounding reference signal, SRS) polling needs to be performed in a plurality of antennas to select an antenna with good performance to perform communication. For example, SRS polling needs to be performed for a signal on an N41 band in four antennas. In addition, normal receiving and transmitting usually need to be performed on an LTE band that is used as an anchor frequency. However, channel control logic of LTE and channel control logic of NR in the terminal device are two independent running mechanisms. When the channel control logic in the LTE standard and the channel control logic in the NR standard in the terminal device simultaneously perform antenna switching, the two standards respectively perform receiving and transmitting control. If the two standards share an antenna, due to simultaneous delivery, for example, when an NR SRS is polled in an LTE diversity antenna, an NR transmit channel may occupy an LTE diversity channel, and an LTE diversity receive channel is interrupted, which affects receiving performance of LTE, and causes reduction in an LTE service capability.

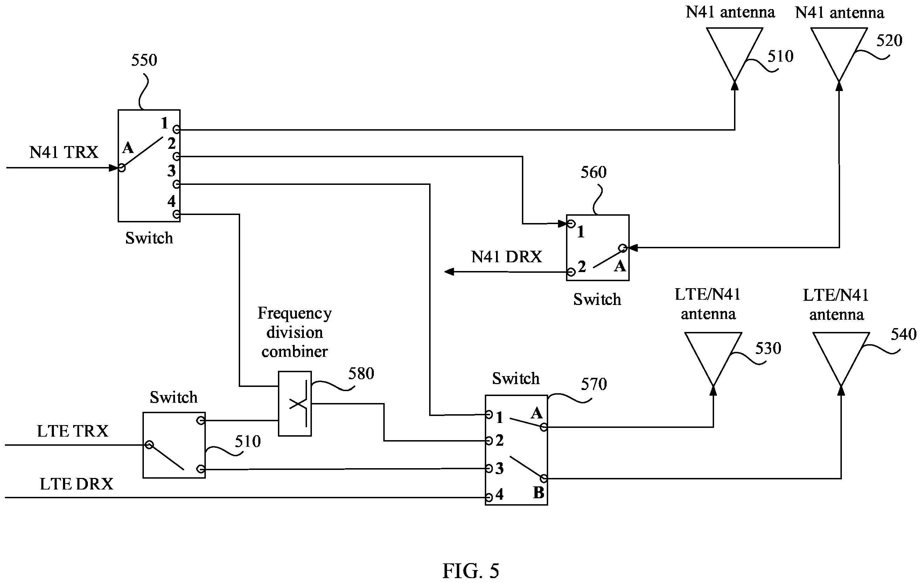

In an implementation, as shown in FIG. 5, an example in which an NR band is N41 is used. When an SRS on N41 is polled in four antennas (that is, an antenna 510, an antenna 520, an antenna 530, and an antenna 540), the SRS on N41 may be coupled to the N41 antenna 510 by using an A-1 channel of a switch 550 in FIG. 5, to be transmitted (in this specification, a form of X-N indicates that an X pin is connected to an N pin, to be specific, A-1 herein indicates that a switch of a pin A in the switch 550 is thrown to a pin 1 of the switch 550, that is, the pin A is connected to the pin 1). Alternatively, the SRS on N41 may be connected to a pin 1 of a switch 560 by using A-2 of the switch 550 and coupled to the N41 antenna 520 by using an A-2 channel of the switch 560, to be transmitted. Alternatively, the SRS on N41 may be connected to a pin 1 of a switch 570 by using A-3 of the switch 550 and coupled to the LTE/N41 antenna 530 by using an A-3 channel of the switch 570, to be transmitted. Alternatively, the SRS on N41 may be coupled to a corresponding port of a frequency division combiner 580 by using A-4 of the switch 550, coupled to a pin 2 of the switch 570 by using a common end of the frequency division combiner 580, and coupled to the LTE/N41 antenna 540 by using 2-B of the switch 570, to be transmitted. In the circuit shown in FIG. 5, when a transmit signal on N41 uses the LTE/N41 antenna 530, a 1-A channel of the switch 570 is occupied, and an LTE transmit channel uses the 2-B channel or a 3-B channel of the switch 570, and the LTE/N41 antenna 540 is used for radiation. In this case, LTE diversity has no available antenna, and a diversity receive channel is interrupted, which causes a reduction in a service capability.

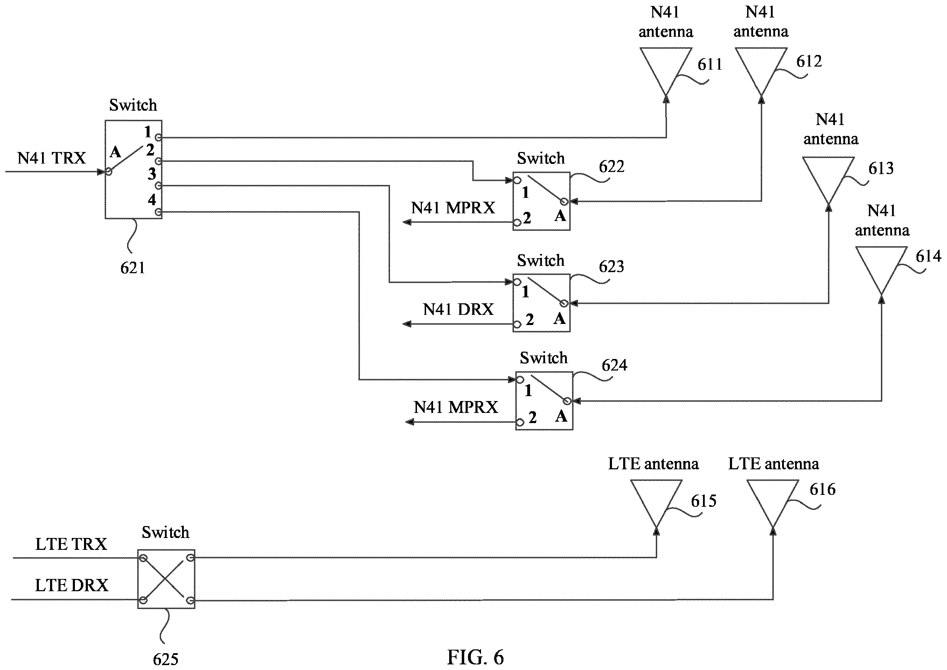

In another implementation, a method for separately disposing antennas in two standards may be used to avoid a conflict. As shown in FIG. 6, an N41 antenna 611, an N41 antenna 612, an N41 antenna 613, and an N41 antenna 614 are dedicated antennas for an NR signal, and an LTE antenna 615 and an LTE antenna 616 are dedicated antennas for an LTE signal. In the solution shown in FIG. 6, a switch 621, a switch 622, a switch 623, and a switch 624 are used to switch a transmit/receive channel on an NR band, and a switch 625 is used to switch an LTE antenna. In FIG. 6, MPRX represents a main receive channel of MIMO, where "M" represents MIMO. The antenna separation solution shown in FIG. 6 leads to a relatively large quantity of antennas. Because a terminal device is usually limited in size, isolation between antennas is insufficient when the quantity of antennas is large, which affects a data throughput of MIMO.

To resolve the foregoing problem, in the following embodiments, a frequency division combiner is used to combine and divide NR and LTE signals, so that the NR and LTE signals can share an antenna and a channel. This can avoid a case in which an LTE diversity channel is disconnected due to a conflict caused by switch switching, and avoid impact on an LTE service.

To describe the embodiments of this application more clearly, a working principle of the radio frequency front-end module is described in detail herein by using flow directions of different signals in the radio frequency front-end module. The first band may be a band in an NR standard, and the first band is a band that has a multi-antenna polling requirement. The second band is different from the first band, and may be a band in an LTE standard or a band in a WCDMA standard, for example, B1, B2, B3, B5, or B28 in LTE, or B1, B2, B3, or B5 in WCDMA. The first band and the second band also have different frequency ranges, and are two bands that can be separated by using a frequency division combiner.

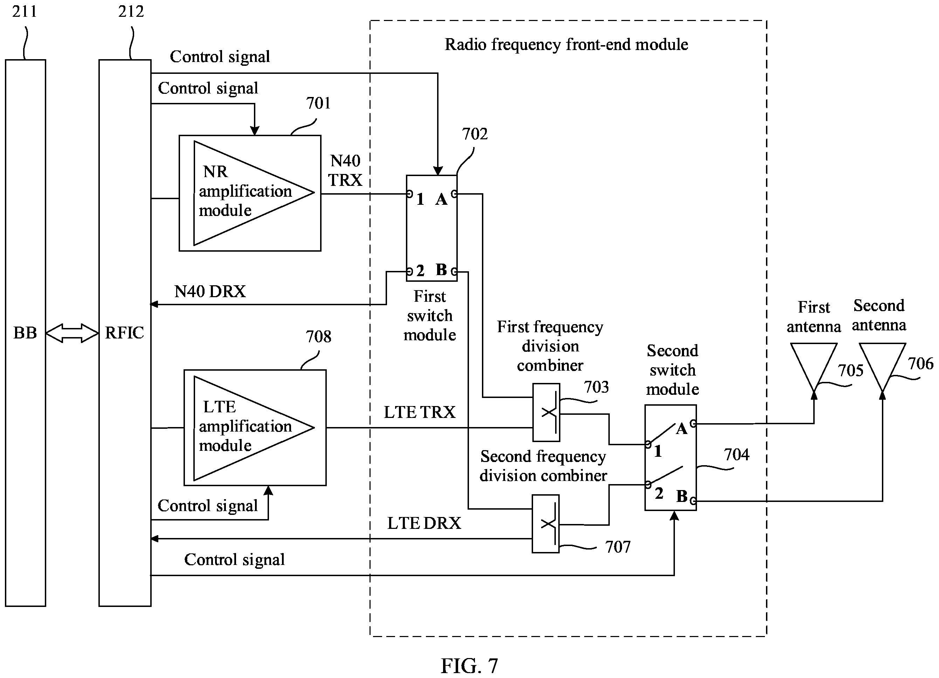

FIG. 7 is a block diagram of a radio frequency front-end module according to an embodiment. In FIG. 7, an example in which a first band is N40 in an NR standard, and a second band is a band in an LTE standard is used for illustration. As shown in FIG. 7, the radio frequency front-end module includes a first switch module 702, a second switch module 704, a first frequency division combiner 703, and a second frequency division combiner 707. The first frequency division combiner 703 is coupled to a first antenna 705 or a second antenna 706 by using the second switch module 704, and the second frequency division combiner 707 is coupled to the second antenna 706 or the first antenna 705 by using the second switch module 704. In this embodiment, LTE and NR may use a same antenna as their respective main antennas, or may separately use different antennas as main antennas.

In a first state, both NR and LTE use the first antenna 705 as a main antenna. When a transmit signal on N40 is sent by the BB 211 as a transmit signal on the first band, the transmit signal enters an NR amplification module 701 through the RFIC 212 for power amplification, enters the first frequency division combiner 703 by using a 1-A channel of the first switch module 702 through switching of the first switch module 702, is coupled from a common end of the first frequency division combiner 703 to a pin 1 of the second switch module 704, and then is coupled, through switching of the second switch module 704, from a 1-A channel of the second switch module 704 to the first antenna 705 for radiation. When an LTE transmit signal is used as a transmit signal on the second band, the transmit signal is sent by the BB 211, enters an LTE amplification module 708 through the RFIC 212 for power amplification, is coupled to the second switch module 704 through the first frequency division combiner 703, and then is coupled, through switching of the second switch module 704, from the 1-A channel of the second switch module 704 to the first antenna 705 for radiation. When an LTE diversity receive signal can be used as a diversity receive signal on the second band, the diversity receive signal is received by the second antenna 706, is coupled to the second switch module 704, and is coupled to a common end of the second frequency division combiner 707 by using a B-2 channel of the second switch module 704, and the diversity receive signal on the second band is coupled, through gating of the second frequency division combiner 707, to the RFIC 212 from a port corresponding to the second frequency division combiner 707, and then is input to the BB 211 for demodulation.

In a second state, NR and LTE separately use different antennas as main antennas. When a transmit signal on N40 is sent by the BB 211 as a transmit signal on the first band, the transmit signal enters the NR amplification module 701 through the RFIC 212 for power amplification, enters the second frequency division combiner 707 by using a 1-B channel of the first switch module 702 through switching of the first switch module 702, is coupled from the common end of the second frequency division combiner 707 to a 2-B channel of the second switch module 704, and is coupled to the second antenna 706 for radiation. When an LTE transmit signal is used as a transmit signal on the second band, the transmit signal is sent by the BB 211, enters the LTE amplification module 708 through the RFIC 212 for power amplification, is coupled to the second switch module 704 through the first frequency division combiner 703, and is coupled, through switching of the second switch module 704, from the 1-A channel of the second switch module 704 to the first antenna 705 for radiation. When an LTE diversity receive signal can be used as a diversity receive signal on the second band, the diversity receive signal is received by the second antenna 706, is coupled to the second switch module 704, and is coupled to the common end of the second frequency division combiner 707 by using the B-2 channel of the second switch module 704, and the diversity receive signal on the second band is coupled, through gating of the second frequency division combiner 707, to the RFIC 212 from the port corresponding to the second frequency division combiner 707, and then is input to the BB 211 for demodulation.

In a third state, both NR and LTE use the second antenna 706 as a main antenna. When a transmit signal on N40 is sent by the BB 211 as a transmit signal on the first band, the transmit signal enters the NR amplification module 701 through the RFIC 212 for power amplification, enters the first frequency division combiner 703 by using the 1-A channel of the first switch module 702 through switching of the first switch module 702, is coupled from the common end of the first frequency division combiner 703 to a 1-B channel of the second switch module 704, and is coupled to the second antenna 706 for radiation. When an LTE transmit signal is used as a transmit signal on the second band, the transmit signal is sent by the BB 211, enters the LTE amplification module 708 through the RFIC 212 for power amplification, is coupled to the second switch module 704 through the first frequency division combiner 703, and is coupled, through switching of the second switch module 704, from the 1-B channel of the second switch module 704 to the second antenna 706 for radiation. When an LTE diversity receive signal can be used as a diversity receive signal on the second band, the diversity receive signal is received by the first antenna 705, is coupled to the second switch module 704, and is coupled to the common end of the second frequency division combiner 707 by using an A-2 channel of the second switch module 704, and the diversity receive signal on the second band is coupled, through gating of the second frequency division combiner 707, to the RFIC 212 from the port corresponding to the second frequency division combiner 707, and then is input to the BB 211 for demodulation.

In a fourth state, NR and LTE separately use different antennas as main antennas. When a transmit signal on N40 is sent by the BB 211 as a transmit signal on the first band, the transmit signal enters the NR amplification module 701 through the RFIC 212 for power amplification, enters the second frequency division combiner 707 by using the 1-B channel of the first switch module 702 through switching of the first switch module 702, is coupled from the common end of the second frequency division combiner 707 to a 2-A channel of the second switch module 704, and is coupled to the first antenna 705 for radiation. When an LTE transmit signal is used as a transmit signal on the second band, the transmit signal is sent by the BB 211, enters the LTE amplification module 708 through the RFIC 212 for power amplification, is coupled to the second switch module 704 through the first frequency division combiner 703, and is coupled, through switching of the second switch module 704, from the 1-B channel of the second switch module 704 to the second antenna 706 for radiation. When an LTE diversity receive signal can be used as a diversity receive signal on the second band, the diversity receive signal is received by the first antenna 705, is coupled to the second switch module 704, and is coupled to the common end of the second frequency division combiner 707 by using the A-2 channel of the second switch module 704, and the diversity receive signal on the second band is coupled, through gating of the second frequency division combiner 707, to the RFIC 212 from the port corresponding to the second frequency division combiner 707, and then is input to the BB 211 for demodulation.

It should be noted that active components such as the switch module and the amplification module in this embodiment of this application may be controlled by using a control signal output by a modem (modem) of the RFIC 212, to switch a channel of the switch module, and a channel and a gain level of the amplification module.

In this embodiment, the radio frequency front-end module switches channels of signals on the first band and the second band by using the first switch module and the second switch module, so that a dual-antenna switching (transmit antenna switch, TAS) service of the first band and the second band can be met while an antenna polling requirement of the first band is met. In this embodiment, regardless of which antenna is used to radiate the transmit signal on the first band, the two antennas both can couple a received receive signal on the second band to the second frequency division combiner through switching of the second switch module, and then couple, based on gating of the second frequency division combiner, a gated receive signal on the second band to an RFIC as the diversity receive signal on the second band, to ensure that a diversity signal on the second band is not interrupted, thereby ensuring service performance of the second band. In addition, in this embodiment, through the first frequency division combiner and the second frequency division combiner, signals on different bands can share a radio frequency channel and share an antenna, so that a quantity of ports of a switch module and a quantity of antennas are decreased. A decrease in the quantity of ports can further simplify a circuit, and a decrease in the quantity of antennas can improve isolation between antennas in a limited volume of an electronic device, thereby improving a data throughput in a MIMO scenario.

As shown in FIG. 7, a main receive signal and a transmit signal in FIG. 7 share some channels. For example, a channel between the NR amplification module 701 and the antenna is a common channel for an NR transmit signal and main receive signal. In some embodiments, a switch may be added between the NR amplification module 701 and the first switch module 702 shown in FIG. 7 to switch a transmit channel and a receive channel on a time division band, or a transceiver duplexer may be added to separate a transmit channel and a receive channel on a frequency division band. Optionally, a single-pole double-throw switch may be integrated in the NR amplification module to switch a transmit channel and a receive channel on a time division band, or a transceiver duplexer may be integrated in the NR amplification module to separate a transmit channel and a receive channel of a frequency division signal. Similarly, a switch may also be added between the LTE amplification module 708 and the first frequency division combiner 703 to switch a transmit channel and a receive channel on a time division band, or a transceiver duplexer may be added to separate a transmit channel and a receive channel on a frequency division band. Optionally, a single-pole double-throw switch may be integrated in the NR amplification module to switch a transmit channel and a receive channel on a time division band, or a transceiver duplexer may be integrated in the NR amplification module to separate a transmit channel and a receive channel of a frequency division signal.

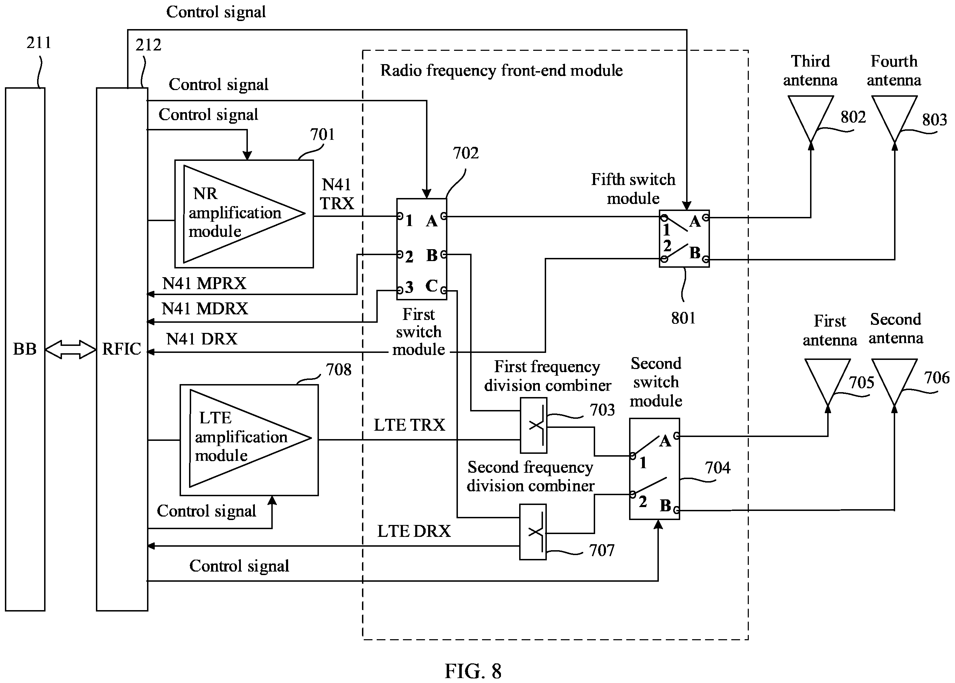

In some embodiments, the circuit block diagram shown in FIG. 7 may further work in another state. When an electronic device further includes another antenna available on the first band, a signal on the first band may be switched between more antennas by increasing a quantity of switch modules or using a switch module with more channels. When the first band is a band that has a four-antenna polling requirement, for example, when the first band is N41, an SRS signal needs to be polled between four antennas. As shown in FIG. 8, based on FIG. 7, the radio frequency front-end module may further include a fifth switch module 801, and the fifth switch module 801 is separately coupled to a third antenna 802, a fourth antenna 803, and the first switch module 702. When the first band is in a polling state or a TAS or MAS service is performed on the first band, the first switch module 702 may be a switch module with more channels, for example, a three-pole three-throw switch module. When the transmit signal on the first band needs to be switched to the third antenna, the first transmit signal may be coupled to a pin 1 of the fifth switch module 801 by using the 1 -A channel of the first switch module 702, and then coupled to the third antenna 802 by using a 1-A channel of the fifth switch module 801 for radiation. In this case, the fourth antenna can be used as an NR diversity antenna to couple a diversity receive signal on the first band to a pin B of the fifth switch module 801, and couple the diversity receive signal to the RFIC 212 by using a B-2 channel of the fifth switch module 801. When the transmit signal on the first band needs to be switched to the fourth antenna, the first transmit signal may be coupled to the pin 1 of the fifth switch module 801 by using the 1-A channel of the first switch module 702, and then coupled to the fourth antenna 803 by using a 1-B channel of the fifth switch module 801 for radiation. In this case, the third antenna can be used as an NR diversity antenna to couple the diversity receive signal on the first band to a pin A of the fifth switch module 801, and couple the diversity receive signal to the RFIC 212 by using an A-2 channel of the fifth switch module 801.

In this embodiment, a signal on the first band is switched between the first antenna and the second antenna through switching of the first switch module and the second switch module. Because the fifth switch module is coupled to the third antenna and the fourth antenna, the signal on the first band can be switched between the third antenna and the fourth antenna through switching of the fifth switch module, thereby meeting the four-antenna polling requirement of the first band. Therefore, an application scenario is wider. When any antenna is used to radiate a signal on the first transmit band, another antenna inputs a receive signal on the first band to the RFIC 212 through a MIMO main receive channel (N41 MPRX) and a MIMO diversity receive channel (N41 MDRX). In addition, the third antenna or the fourth antenna may further input, the diversity receive signal on the first band to the RFIC 212 by using an N41 DRX channel shown in FIG. 8 through switching of the fifth switch module 801, to ensure receiving performance of the first band.

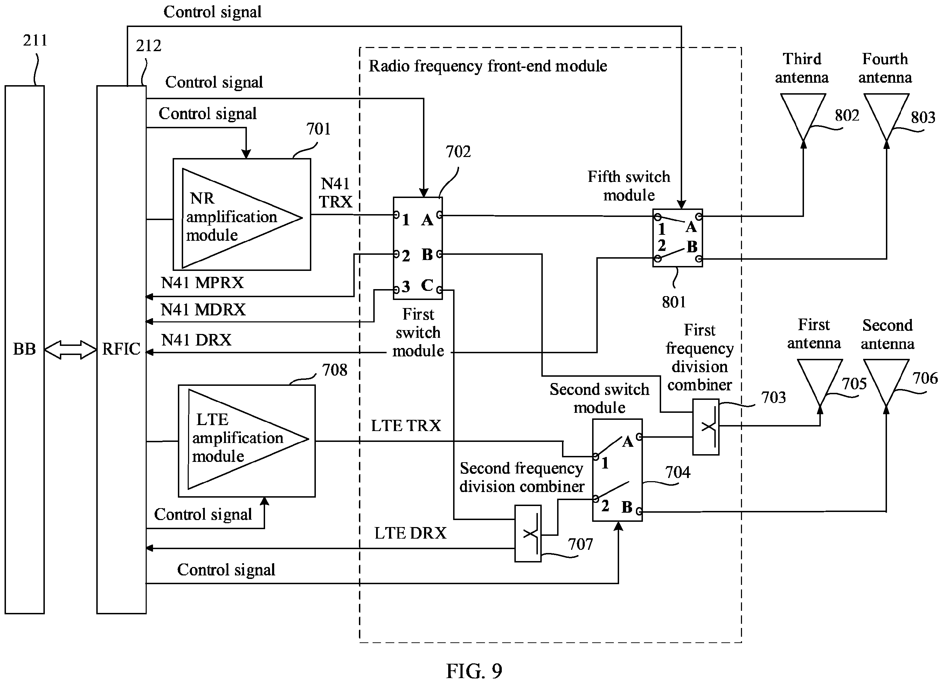

In some embodiments, as shown in FIG. 9, the radio frequency front-end module may further include a first switch module 702, a second switch module 704, a first frequency division combiner 703, and a second frequency division combiner 707. The second switch module 704 is coupled to a first antenna 705 by using the first frequency division combiner 703, and the second frequency division combiner 707 is coupled to a second antenna 706 by using the second switch module 704. This embodiment is described by using an example in which a first band is N41 and a second band is an LTE band in a scenario in which no TAS service is performed in LTE.

In a fifth state, when a transmit signal on N41 is sent by the BB 211 as a transmit signal on the first band, the transmit signal enters an NR amplification module 701 through the RFIC 212 for power amplification, enters the first frequency division combiner 703 by using a 1-B channel of the first switch module 702 through switching of the first switch module 702, and is coupled from a common end of the first frequency division combiner 703 to the first antenna 705 for radiation. When an LTE transmit signal is used as a transmit signal on the second band, the transmit signal is sent by the BB 211, enters an LTE amplification module 708 through the RFIC 212 for power amplification, is coupled to the second switch module 704, and is coupled, through switching of the second switch module 704, from a 1-A channel of the second switch module 704 to the first antenna 705 for radiation. When an LTE diversity receive signal can be used as a diversity receive signal on the second band, the diversity receive signal is received by the second antenna 706, is coupled to the second switch module 704, and is coupled to a common end of the second frequency division combiner 707 by using a B-2 channel of the second switch module 704, and the diversity receive signal on the second band is coupled, through gating of the second frequency division combiner 707, to the RFIC 212 from a port corresponding to the second frequency division combiner 707, and then is input to the BB 211 for demodulation.

In a sixth state, when a transmit signal on N41 is sent by the BB 211 as a transmit signal on the first band, the transmit signal enters the NR amplification module 701 through the RFIC 212 for power amplification, is coupled to the second frequency division combiner 707 by using a 1-C channel of the first switch module 702 through switching of the first switch module 702, is coupled to a pin 2 of the second switch module 704 through the common end of the second frequency division combiner 707, and is coupled to the second antenna 706 by using a 2-B channel of the second switch module 704 for radiation. When an LTE transmit signal is used as a transmit signal on the second band, the transmit signal is sent by the BB 211, enters the LTE amplification module 708 through the RFIC 212 for power amplification, is coupled to a pin 1 of the second switch module 704, is coupled to the first frequency division combiner 703 by using the 1-A channel of the second switch module 704 through switching of the second switch module 704, and is coupled to the first antenna 705 through the common end of the first frequency division combiner 703 for radiation. When an LTE diversity receive signal can be used as a diversity receive signal on the second band, the diversity receive signal is received by the second antenna 706, is coupled to a pin B of the second switch module 704, and is coupled to the common end of the second frequency division combiner 707 by using the B-2 channel of the second switch module 704, and the diversity receive signal on the second band is coupled, through gating of the second frequency division combiner 707, to the RFIC 212 from the port corresponding to the second frequency division combiner 707, and then is input to the BB 211 for demodulation.

In this embodiment, the second switch module is coupled to the first antenna by using the first frequency division combiner, and the second frequency division combiner is coupled to the second antenna by using the second switch module. Therefore, regardless of whether the transmit signal on the first band is transmitted by using the first antenna or the second antenna, the transmit signal on the second band can be coupled to the first antenna by using the second switch module and the first frequency division combiner to be transmitted. In addition, the second antenna can couple the received diversity receive signal on the second band to the second switch module, and couple the diversity receive signal on the second band to an RFIC through gating of the second frequency division combiner, to ensure that a diversity receive channel of the second band is connected, so that receiving performance of the second band is not affected, thereby ensuring service performance of the second band.

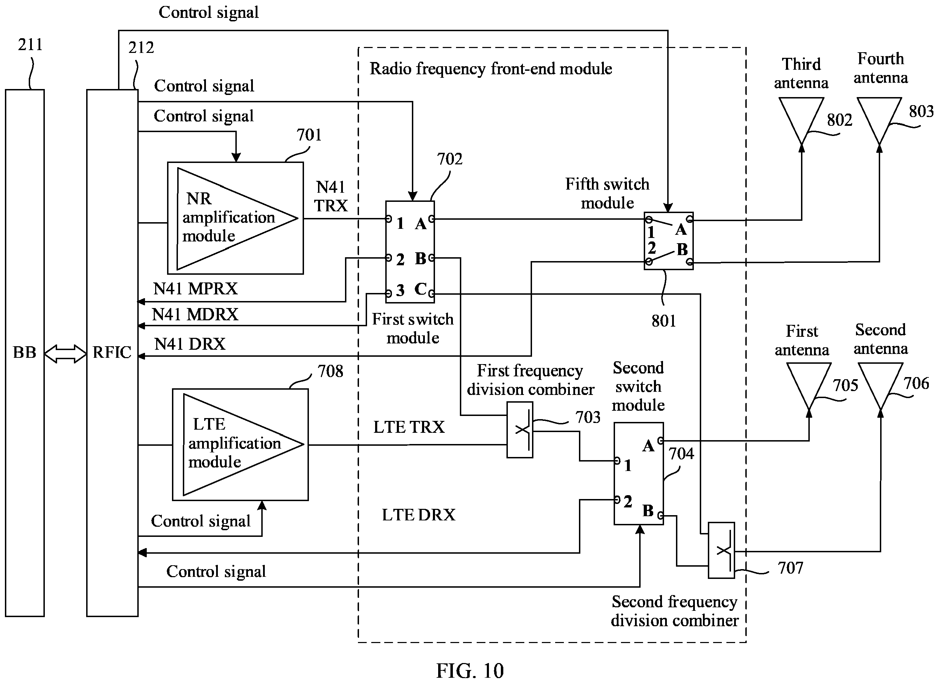

In some embodiments, as shown in FIG. 10, the radio frequency front-end module may further include a first switch module 702, a second switch module 704, a first frequency division combiner 703, and a second frequency division combiner 707. The first frequency division combiner 703 is coupled to a first antenna 705 by using the second switch module 704, and the second switch module 704 is coupled to a second antenna 706 by using the second frequency division combiner 707. This embodiment is described by using an example in which a first band is N41 and a second band is an LTE band in a scenario in which no TAS service is performed in LTE.

In a seventh state, when a transmit signal on N41 is sent by the BB 211 as a transmit signal on the first band, the transmit signal enters an NR amplification module 701 through the RFIC 212 for power amplification, enters the first frequency division combiner 703 by using a 1-B channel of the first switch module 702 through switching of the first switch module 702, is coupled from a common end of the first frequency division combiner 703 to the second switch module 704, and is coupled to the first antenna 705 by using a 1-A channel of the second switch module 704 for radiation. When an LTE transmit signal is used as a transmit signal on the second band, the transmit signal is sent by the BB 211, enters an LTE amplification module 708 through the RFIC 212 for power amplification, is coupled to the first frequency division combiner 703, is coupled to the second switch module 704 through the common end of the first frequency division combiner 703, and is coupled, through switching of the second switch module 704, from the 1-A channel of the second switch module 704 to the first antenna 705 for radiation. When an LTE diversity receive signal can be used as a diversity receive signal on the second band, the diversity receive signal is received by the second antenna 706, is coupled to the second frequency division combiner 707, is coupled from the second frequency division combiner 707 to a pin B of the second switch module 704 through gating of the second frequency division combiner 707, is coupled to the RFIC 212 by using a B-2 channel of the second switch module 704, and then is input to the BB 211 for demodulation.

In an eighth state, when a transmit signal on N41 is sent by the BB 211 as a transmit signal on the first band, the transmit signal enters the NR amplification module 701 through the RFIC 212 for power amplification, enters the second frequency division combiner 707 by using a 1-C channel of the first switch module 702 through switching of the first switch module 702, and is coupled from a common end of the second frequency division combiner 707 to the second antenna 706 for radiation. When an LTE transmit signal is used as a transmit signal on the second band, the transmit signal is sent by the BB 211, enters the LTE amplification module 708 through the RFIC 212 for power amplification, is coupled to the first frequency division combiner 703, is coupled to the second switch module 704 through the common end of the first frequency division combiner 703, and is coupled, through switching of the second switch module 704, from the 1-A channel of the second switch module 704 to the first antenna 705 for radiation. When an LTE diversity receive signal can be used as a diversity receive signal on the second band, the diversity receive signal is received by the second antenna 706, is coupled to the second frequency division combiner 707, is coupled from the second frequency division combiner 707 to a pin B of the second switch module 704 through gating of the second frequency division combiner 707, is coupled to the RFIC 212 by using the B-2 channel of the second switch module 704, and then is input to the BB 211 for demodulation.

In this embodiment, the first frequency division combiner is coupled to the first antenna by using the second switch module, and the second switch module is coupled to the second antenna by using the second frequency division combiner. Therefore, regardless of whether the transmit signal on the first band is transmitted by using the first antenna or the second antenna, the transmit signal on the second band can be coupled to the first antenna by using the first frequency division combiner and the second switch module to be transmitted. In addition, the second antenna can couple the received diversity receive signal on the second band to the second frequency division combiner, and couple the diversity receive signal on the second band to an RFIC by using the second switch module through gating of the second frequency division combiner, to ensure that a diversity receive channel of the second band is connected, so that receiving performance of the second band is not affected, thereby ensuring service performance of the second band.

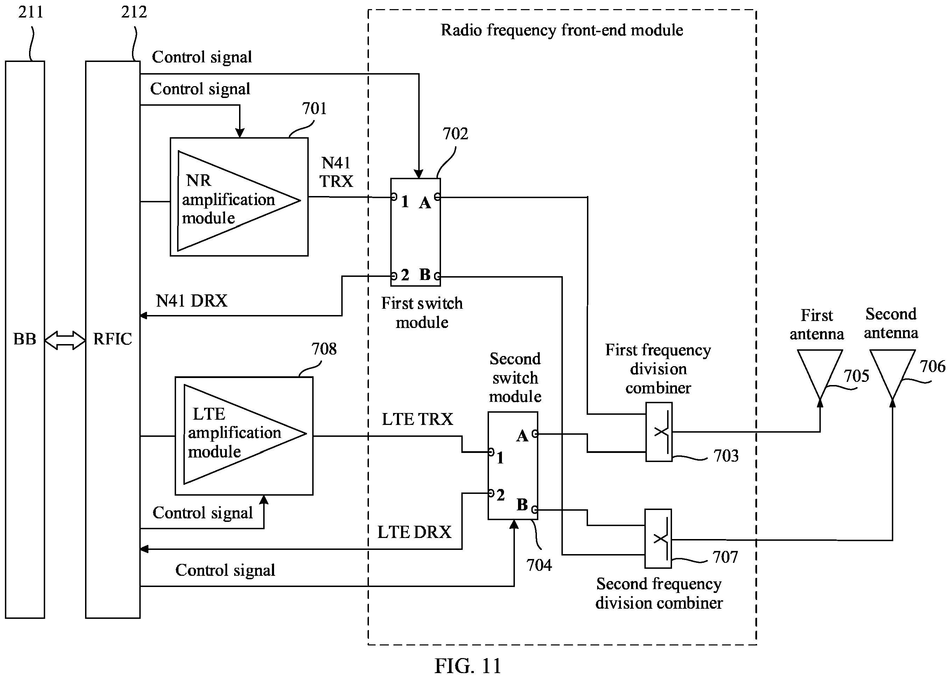

In an embodiment, as shown in FIG. 11, the radio frequency front-end circuit may include a first switch module 702, a second switch module 704, a first frequency division combiner 703, and a second frequency division combiner 707. The first frequency division combiner 703 is coupled to a first antenna 705 by using the second switch module 704, and the second switch module 704 is coupled to a second antenna 706 by using the second frequency division combiner 707. This embodiment is described by using an example in which a first band is N41 and a second band is an LTE band.

In a ninth state, when a transmit signal on N41 is sent by the BB 211 as a transmit signal on the first band, the transmit signal enters an NR amplification module 701 through the RFIC 212 for power amplification, is coupled to the first frequency division combiner 703 by using a 1-A channel of the first switch module 702 through switching of the first switch module 702, and is coupled from a common end of the first frequency division combiner 703 to the first antenna 705 for radiation. When an LTE transmit signal is used as a transmit signal on the second band, the transmit signal is sent by the BB 211, enters an LTE amplification module 708 through the RFIC 212 for power amplification, is coupled to the second switch module 704, is coupled to the first frequency division combiner 703 by using a 1-A channel of the second switch module 704, and is coupled to the first antenna 705 through the first frequency division combiner 703 for radiation. When an LTE diversity receive signal can be used as a diversity receive signal on the second band, the diversity receive signal is received by the second antenna 706, is coupled to a common end of the second frequency division combiner 707, is coupled to a pin B of the second switch module 704 through gating of the second frequency division combiner 707, is coupled to the RFIC 212 by using a B-2 channel of the second switch module 704, and then is input to the BB 211 for demodulation.

In a tenth state, when a transmit signal on N41 is sent by the BB 211 as a transmit signal on the first band, the transmit signal enters the NR amplification module 701 through the RFIC 212 for power amplification, is coupled to the first frequency division combiner 703 by using the 1-A channel of the first switch module 702 through switching of the first switch module 702, and is coupled from the common end of the first frequency division combiner 703 to the first antenna 705 for radiation. When an LTE transmit signal is used as a transmit signal on the second band, the transmit signal is sent by the BB 211, enters the LTE amplification module 708 through the RFIC 212 for power amplification, is coupled to the second switch module 704, is coupled to the second frequency division combiner 707 by using a 1-B channel of the second switch module 704, and is coupled to the second antenna 706 through the first frequency division combiner 707 for radiation. When an LTE diversity receive signal can be used as a diversity receive signal on the second band, the diversity receive signal is received by the first antenna 705, is coupled to the common end of the first frequency division combiner 703, is coupled to a pin A of the second switch module 704 through gating of the first frequency division combiner 703, is coupled to the RFIC 212 by using an A-2 channel of the second switch module 704, and then is input to the BB 211 for demodulation.

In an eleventh state, when a transmit signal on N41 is sent by the BB 211 as a transmit signal on the first band, the transmit signal enters the NR amplification module 701 through the RFIC 212 for power amplification, is coupled to the second frequency division combiner 707 by using a 1-B channel of the first switch module 702 through switching of the first switch module 702, and is coupled from a common end of the second frequency division combiner 707 to the second antenna 706 for radiation. When an LTE transmit signal is used as a transmit signal on the second band, the transmit signal is sent by the BB 211, enters the LTE amplification module 708 through the RFIC 212 for power amplification, is coupled to the second switch module 704, is coupled to the first frequency division combiner 703 by using the 1-A channel of the second switch module 704, and is coupled to the first antenna 705 through the first frequency division combiner 703 for radiation. When an LTE diversity receive signal can be used as a diversity receive signal on the second band, the diversity receive signal is received by the second antenna 706, is coupled to the common end of the second frequency division combiner 707, is coupled to a pin B of the second switch module 704 through gating of the second frequency division combiner 707, is coupled to the RFIC 212 by using the B-2 channel of the second switch module 704, and then is input to the BB 211 for demodulation.

In a twelfth state, when a transmit signal on N41 is sent by the BB 211 as a transmit signal on the first band, the transmit signal enters the NR amplification module 701 through the RFIC 212 for power amplification, is coupled to the second frequency division combiner 707 by using the 1-B channel of the first switch module 702 through switching of the first switch module 702, and is coupled from the common end of the second frequency division combiner 707 to the second antenna 706 for radiation. When an LTE transmit signal is used as a transmit signal on the second band, the transmit signal is sent by the BB 211, enters the LTE amplification module 708 through the RFIC 212 for power amplification, is coupled to the second switch module 704, is coupled to the second frequency division combiner 707 by using the 1-B channel of the second switch module 704, and is coupled to the second antenna 706 through the second frequency division combiner 707 for radiation. When an LTE diversity receive signal can be used as a diversity receive signal on the second band, the diversity receive signal is received by the first antenna 705, is coupled to the common end of the first frequency division combiner 703, is coupled to a pin A of the second switch module 704 through gating of the first frequency division combiner 703, is coupled to the RFIC 212 by using the A-2 channel of the second switch module 704, and then is input to the BB 211 for demodulation.

In this embodiment, the first frequency division combiner is coupled to the first antenna by using the second switch module, and the second switch module is coupled to the second antenna by using the second frequency division combiner, so that the first switch module can be completely used to switch channels of the transmit signal and a receive signal on the first band and does not need to switch a channel of a signal on the second band, and the second switch module can be completely used to switch channels of the transmit signal and a receive signal on the second band and does not need to switch a channel of a signal on the first band. Therefore, switch modules through which the two bands respectively flow are completely decoupled. The two bands respectively use independent switch modules to control respective channel switching. When SRS polling, a TAS service, or a multi-antenna switching MAS service is performed on the first band, and a TAS service is performed on the second band, there is no conflict between switch logic configurations. Therefore, there is no need to rely on a platform to arbitrate switch logic, thereby reducing a platform requirement and improving compatibility of the radio frequency front-end module. In addition, through decoupling between switches of the first band and the second band, and the first frequency division combiner and the second frequency division combiner, signals on the first band and the second band share a channel and an antenna, thereby decreasing a quantity of antennas, improving isolation between antennas, and further improving a throughput. Moreover, because the switch modules of the two bands are completely decoupled, when there is no conflict between switch configurations, the first band and the second band share an antenna by using the first frequency division combiner and the second frequency division combiner. Therefore, regardless of whether the transmit signal, that is, a 1T4R SRS, on the first band is switched to the first antenna or the second antenna, a channel of a diversity signal on the second band is not interrupted, so that receiving performance and a throughput of the second band are ensured, and a service on the second band is not affected. When the second band is an LTE band, an LTE service is not affected. Therefore, stability of using the LTE band as an anchor frequency in an ENDC scenario can be improved. Further, in this embodiment, stable simultaneous receiving and transmitting are performed on the first band and the second band, so that a primary card and a secondary card can perform simultaneous receiving. Therefore, a DR-DSDS scenario and a DSDA scenario can be implemented, thereby extending a frequency combination supported by a product, and improving a communication specification of the product in a dual card mode.

In the embodiment shown in FIG. 11, when the first band is a type of band, such as NR N41, that is close to a Wi-Fi frequency, and the second band is an LTE band, in the embodiment in FIG. 11, signals on the first band and the second band can share a channel and an antenna by using the first frequency division combiner and the second frequency division combiner while switches of an NR channel and an LTE channel are completely decoupled, thereby decreasing a quantity of antennas near a frequency of 2.4G to 2.7G, improving isolation between antennas, and further ensuring service performance of Wi-Fi while ensuring service performance of NR in a MIMO scenario.

The circuit block diagram provided in FIG. 11 may further work in another working state in actual working and is not limited to a state in which simultaneous receiving and transmitting are performed on the first band and the second band, and may be in a state in which receiving and transmitting are performed on only the first band, may be a state in which receiving and transmitting are performed on only the second band, may be a state in which receiving and transmitting are performed on the first band and receiving is performed on the second band, or may be a state in which receiving is performed on the first band and receiving and transmitting are performed on the second band. This is not limited in this embodiment of this application.

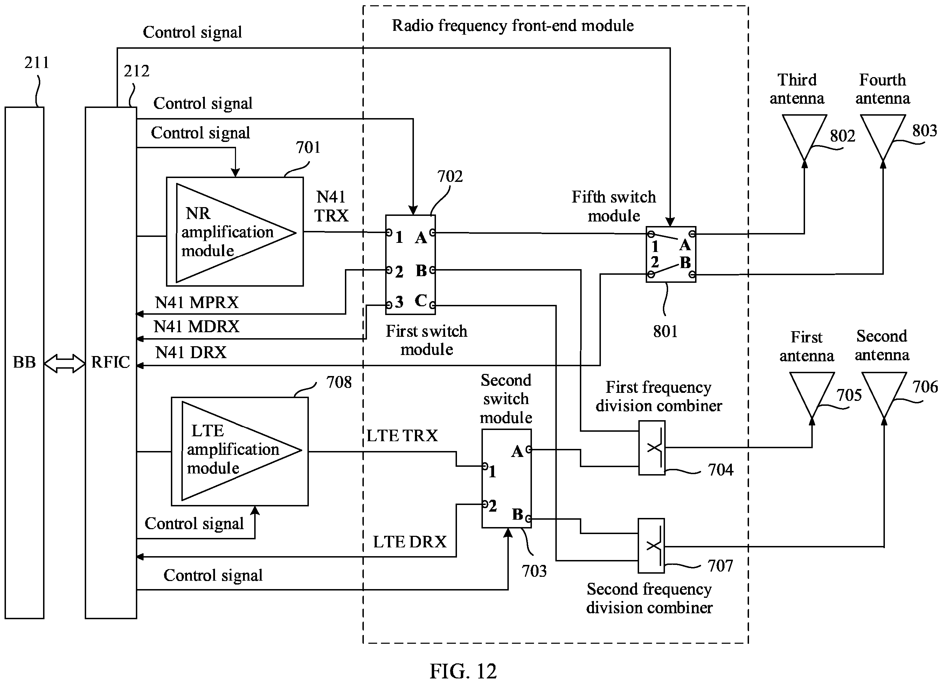

In some embodiments, based on FIG. 11, as shown in FIG. 12, a fifth switch module 801 may be further included. Adaptively, the first switch module 702 is shown by using a three-pole three-throw switch module as an example. For a working principle and a technical effect of the fifth switch module 801 in this embodiment, refer to the description in the embodiment in FIG. 8. Details are not described herein again.

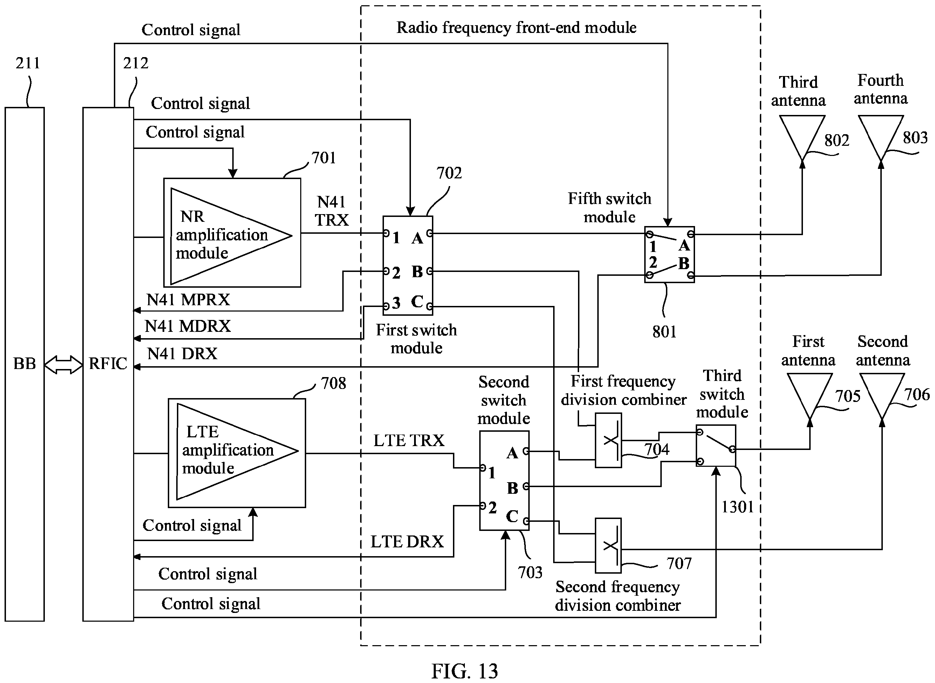

In some embodiments, based on the foregoing embodiments, as shown in FIG. 13, the radio frequency front-end module may further include a third switch module 1301. FIG. 13 is illustrated based on FIG. 12. The third switch module 1301 is separately coupled to the first frequency division combiner 703, the first antenna 705, and the second switch module 704, and is configured to switch a channel between the first frequency division combiner 703 and the first antenna 705 and a channel between the second switch module 704 and the first antenna 705. In FIG. 13, the transmit signal on the second band and a receive signal on the second band are coupled to the third switch module 1301 by using the second switch module 704, and are radiated by using the first antenna 705, so that the transmit signal on the second band and the receive signal on the second band do not need to pass through the first frequency division combiner 703, which improves flexibility of radio frequency channel selection, and improves a product specification. In addition, insertion losses (that is, radio frequency front-end losses, loss), on a radio frequency channel, of the transmit signal on the second band and the receive signal on the second band can be reduced, to reduce power consumption of the second band during transmission, and improve receiving sensitivity of the second band during receiving. In addition, when a signal on a special band, for example, B7, flows through the channel between the second switch module 704 and the first antenna 705, because the insertion loss is reduced, receiving/transmitting performance of the special band is further improved. Because a signal may not pass through the frequency division combiner, a problem that a product specification is limited because a signal on a special band cannot pass gating of the frequency division combiner is also avoided, so that the radio frequency front-end module is compatible with more bands, thereby improving product compatibility and further enriching product specifications.

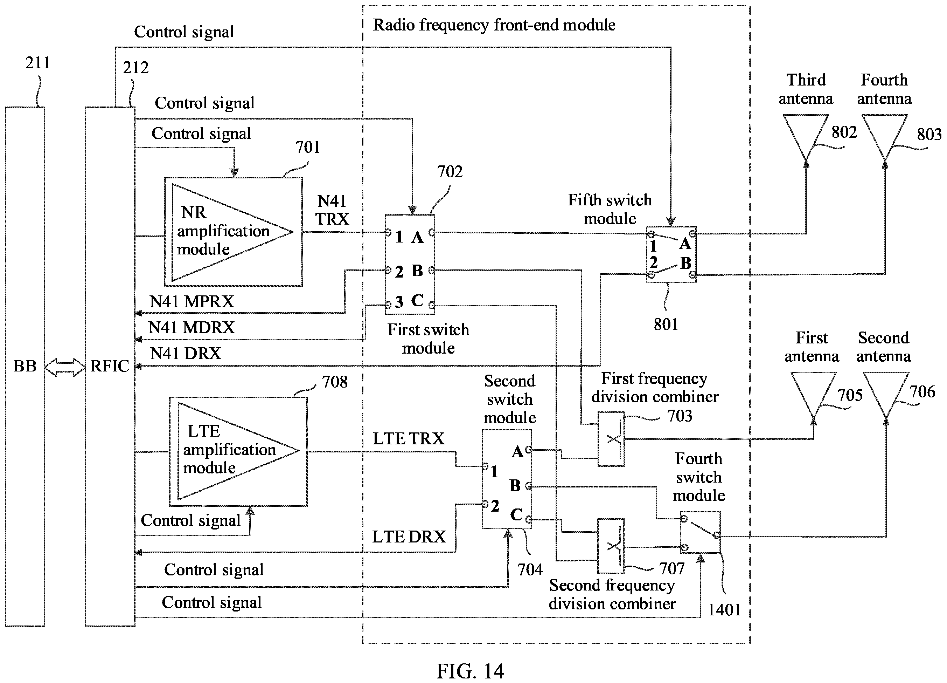

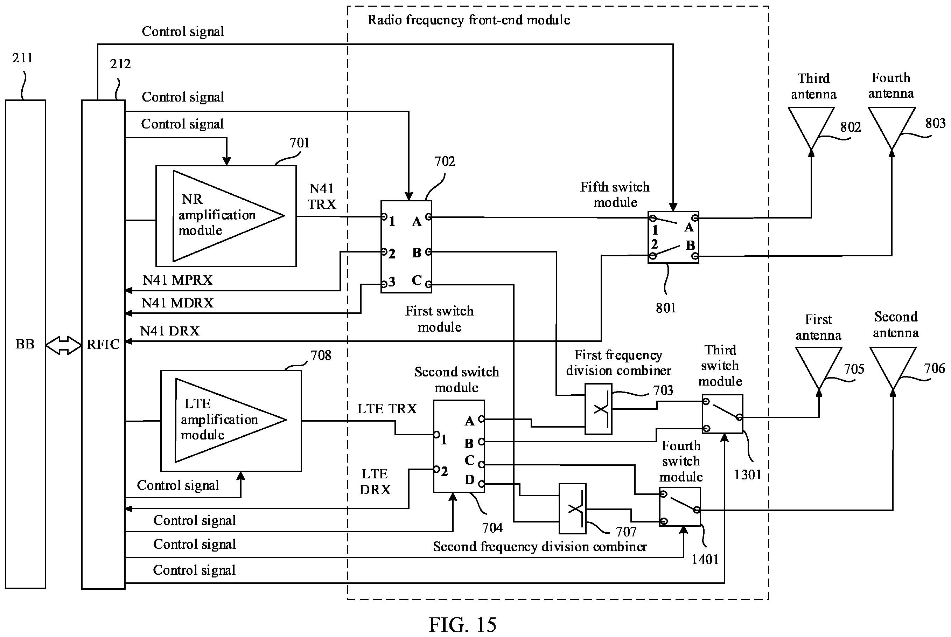

In some embodiments, based on the foregoing embodiments, the radio frequency front-end module may further include a fourth switch module 1401. The fourth switch module 1401 is separately coupled to the second frequency division combiner 707, the second antenna 706, and the second switch module 704, and is configured to switch a channel between the second frequency division combiner 707 and the second antenna 706 and a channel between the second switch module 704 and the second antenna 706. Specifically, referring to FIG. 14 and FIG. 15, in FIG. 14, the transmit signal on the second band and a receive signal on the second band are coupled to the fourth switch module 1401 by using the second switch module 704, and are radiated by using the second antenna 706, so that the transmit signal on the second band and the receive signal on the second band do not need to pass through the second frequency division combiner 707, which improves flexibility of radio frequency channel selection, and improves a product specification. In addition, insertion losses, on a radio frequency channel, of the transmit signal on the second band and the receive signal on the second band can be reduced, to reduce power consumption of the second band during transmission, and improve receiving sensitivity of the second band during receiving. In addition, when a signal on a special band, for example, B7, flows through the channel between the second switch module 704 and the second antenna 706, because the insertion loss is reduced, receiving/transmitting performance of the special band is further improved. Because a signal may not pass through the frequency division combiner, a problem that a product specification is limited because a signal on a special band cannot pass gating of the frequency division combiner is also avoided, so that the radio frequency front-end module is compatible with more bands, thereby improving product compatibility and further enriching product specifications.

In an embodiment, as shown in FIG. 15, both the third switch module 1301 and the fourth switch module 1401 may be further included. In this embodiment, for implementation principles and technical effects of the third switch module 1301 and the fourth switch module 1401, refer to descriptions in the embodiments in FIG. 13 and FIG. 14. In FIG. 15, a pin of the third switch module 1301 and a pin of the fourth switch module 1401 are directly connected to the second switch module 704, and a signal does not need to flow through the first frequency division combiner 703 and the second frequency division combiner 707, so that the transmit signal on the second band and the diversity receive signal on the second band do not need to pass through the frequency division combiner, which improves flexibility of radio frequency channel selection, improves a product specification. In addition, insertion losses, on a radio frequency channel, of the transmit signal on the second band and the receive signal on the second band can be reduced, to reduce power consumption of the second band during transmission, and improve receiving sensitivity of the second band during receiving. Because a signal may not pass through the frequency division combiner, a problem that a product specification is limited because a signal on a special band cannot pass gating of the frequency division combiner is also avoided, so that the radio frequency front-end module is compatible with more bands, thereby improving product compatibility and further enriching product specifications.

In some embodiments, specific forms of the first switch module 702, the second switch module 704, the third switch module 1301, and the fourth switch module 1401 may be adjusted based on a quantity of channels of a supported band, provided that radio frequency channel switching can be implemented.

In some embodiments, the third switch module 1301 and the fourth switch module 1401 may be single-pole double-throw switch modules, or may be single-pole triple-throw switch modules. In this case, the second switch module 704 may be a double-pole five-throw or double-pole six-throw switch module, to be compatible with more special bands, thereby further improve product compatibility and enriching product specifications. In some embodiments, the second switch module 704 may alternatively be a three-pole four-throw switch module or another switch module. The second switch module 704 may be compatible with more receive channels, for example, a plurality of MIMO receive channels, by using a channel directly connected to the RFIC 212.

In some embodiments, the first band includes an N40 or N41 band, and the second band includes an LTE band. Because an LTE diversity channel is not interrupted, an LTE service is not affected, so that stability of using the LTE band as an anchor frequency in an ENDC scenario can be improved.

In some embodiments, the transmit signal on the first band is a sounding reference signal SRS. When the transmit signal on the first band is a 1T4R SRS, because switch modules of the first band and the second band are completely decoupled, there is no conflict between switch logic configurations. Therefore, there is no need to rely on a platform to arbitrate switch logic, thereby reducing a platform requirement and improving compatibility of the radio frequency front-end module. When there is no conflict between switch configurations, the first band and the second band share an antenna during the SRS by using the first frequency division combiner and the second frequency division combiner. Therefore, regardless of whether the SRS on the first band is switched to the first antenna or the second antenna, a channel of a diversity signal on the second band is not interrupted, so that receiving performance and a throughput of the second band are ensured, and a service on the second band is not affected.

In some embodiments, the transmit signal on the first band and a receive signal on the first band are service signals of a first card, a receive signal on the second band is a listening signal of a second card, the receive signal on the first band includes a main receive signal on the first band and/or the diversity receive signal on the first band, and the receive signal on the second band includes a main receive signal on the second band and/or the diversity receive signal on the second band. The first card may be a primary card, the second card is a secondary card, the primary card is used as a service card, and the secondary card is used as a listening card, so that a dual SIM dual standby scenario can be implemented.

In some embodiments, the transmit signal on the first band and a receive signal on the first band are service signals of a first card, the transmit signal on the second band and a receive signal on the second band are service signals of a second card, the receive signal on the first band includes a main receive signal on the first band and/or the diversity receive signal on the first band, and the receive signal on the second band includes a main receive signal on the second band and/or the diversity receive signal on the second band. The first card may be a primary card, the second card is a secondary card, the primary card is used as a service card, and the secondary card may also be used as a service card, so that a dual SIM dual active scenario can be implemented.

Further, in this embodiment, stable simultaneous receiving and transmitting are performed on the first band and the second band, so that a primary card and a secondary card can separately use the first band and the second band to perform simultaneous receiving and transmitting. Therefore, a DR-DSDS scenario and a DSDA scenario can be implemented, thereby extending a frequency combination supported by a product, and improving a communication specification of the product in a dual card mode.

In an embodiment, the first switch module 702 is a three-pole three-throw switch module, and the second switch module 704 is a double-pole four-throw switch module. In some embodiments, the first band is an N40 or N41 band, and the second band is an LTE band in a 4G standard or a band in a 3rd generation mobile communications technology 3G standard. As shown in FIG. 15, for example, the first band is N41, and the second band is LTE B3. When a transmit signal on N41 passes through the 1-A channel of the first switch module 702 and is coupled to the third antenna 802 by using the 1-A channel of the fifth switch module, the fourth antenna 803 may couple a diversity receive signal on N41 to the RFIC 212 by using the B-2 channel of the fifth switch module. A transmit signal and a main receive signal on B3 may pass through the 1-A channel of the second switch module 704 and be coupled to the first antenna through the first frequency division combiner 703, the third switch module 1301, and the first antenna 705. A receive signal that is on B3 and that is received by the second antenna 706 enters the RFIC 212 as a diversity receive signal on B3 through the fourth switch module 1401, the second frequency division combiner 707, and a D-2 channel of the second switch module 704. In addition, a receive signal that is on N41 and that is received by the first antenna 705 may further enter the RFIC 212 as a MIMO main receive signal on N41 (N41M main receive) through the third switch module 1301, the first frequency division combiner 703, and the B-2 channel of the first switch module 702. A receive signal that is on N41 and that is received by the second antenna 706 may further enter the RFIC 212 as a MIMO diversity receive signal on N41 (N41M diversity receive) through the fourth switch module 1401, the second frequency division combiner 707, and a C-3 channel of the first switch module 702. When any antenna is used to radiate the transmit signal on N41, all other antennas may be used as N41 receive antennas. The channel between the first frequency division combiner 703 and the first antenna 705 and the channel between the second frequency division combiner 707 and the second antenna 706 are channels shared by N41 and B3. When simultaneous receiving and transmitting are performed in NR and LTE or when simultaneous receiving and transmitting are performed on B41 and another LTE band, switch preemption does not exist. Therefore, functions of DR-DSDS and DSDA can be implemented, thereby extending a supported frequency combination, and improving a communication specification of a product in a dual card mode.

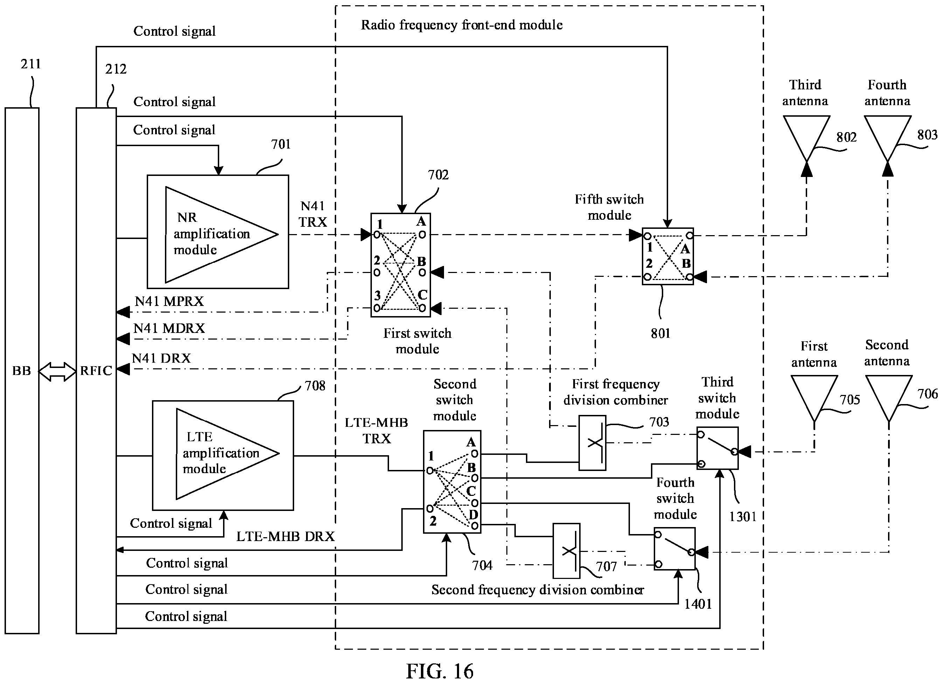

To describe in detail an implementation process of the embodiments of this application more clearly, the following describes in detail signal flow directions on different bands based on the circuit example in FIG. 15 with reference to FIG. 16 to FIG. 21. FIG. 16 to FIG. 21 show cases in which signal transmission is performed in the circuit in FIG. 15 in different states. The circuit in FIG. 15 may support a plurality of communication states. In addition, the circuits shown in FIG. 7 to FIG. 14 may also work in different states.

When the circuit in FIG. 15 is in an N41 single-band receiving/transmitting state, for example, the circuit in FIG. 15 is in an NR cell, if the third antenna 802 is used as a main antenna, the first antenna 705, the second antenna 706, and the fourth antenna 803 are used as diversity antennas. FIG. 16 is a schematic diagram of a signal flow direction in the circuit in FIG. 15 when a band B41 or N41 is in 4×4 MIMO (that is, 4×4 MIMO). The transmit signal on the first band may be transmitted by using an N41 TRX channel, as shown by "- - - " in FIG. 16; and the receive signal on the first band may be received by using one or more of the N41 TRX channel, an N41 DRX channel, an N41 MPRX channel, or an N41 MDRX channel, for example, the receive signal on the first band may be received by using two or four of the N41 TRX channel, the N41 DRX channel, the N41 MPRX channel, or the N41 MDRX channel, as shown by "- · - · " in FIG. 16. If the third antenna 802 is held, one of the first antenna 705, the second antenna 706, or the fourth antenna 803 may be further used as a main antenna, and the other three antennas are used as diversity antennas. The transmit signal on N41 may alternatively be an SRS, and the SRS on N41 may alternatively be transmitted on the first antenna 705 to the fourth antenna 803 in a polling manner.

When the circuit in FIG. 15 is in a B41 single-band receiving/transmitting state, for example, the circuit in FIG. 15 is in an LTE cell, if the third antenna 802 is used as a main antenna, the first antenna 705, the second antenna 706, and the fourth antenna 803 are used as diversity antennas. As shown in FIG. 16, the transmit signal on the first band may be transmitted by using an N41 TRX channel; and the receive signal on the first band may be received by using one or more of the N41 TRX channel, an N41 DRX channel, an N41 MPRX channel, or an N41 MDRX channel, for example, the receive signal on the first band may be received by using two or four of the N41 TRX channel, the N41 DRX channel, the N41 MPRX channel, or the N41 MDRX channel. If the third antenna 802 is held, one of the first antenna 705, the second antenna 706, or the fourth antenna 803 may be used as a main antenna of B41, and the other three antennas are used as diversity antennas of B41. Optionally, the SRS on B41 may be transmitted on the first antenna 705 to the fourth antenna 803 in a polling manner.

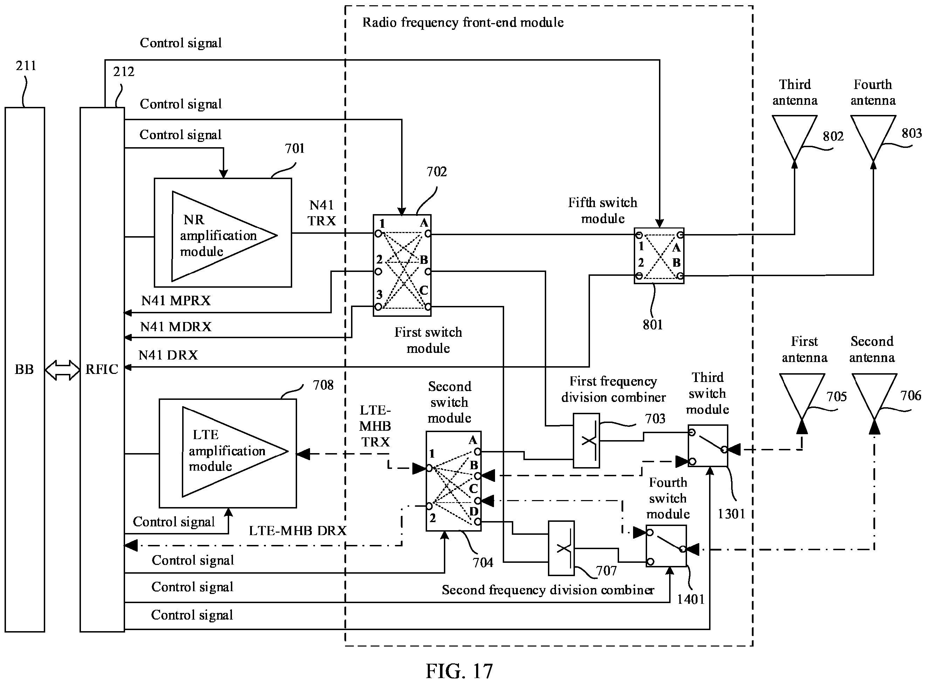

When the circuit in FIG. 15 is in a single-band receiving/transmitting state of a band such as B1, B3, or B39, for example, the circuit in FIG. 15 is in an LTE cell, if the first antenna 705 is used as a main antenna, the second antenna 706 is used as a diversity antenna. As shown in FIG. 17, the transmit signal on the second band may be transmitted by using an LTE TRX channel of a middle-high band (middle-high band, MHB), as shown by "-" in FIG. 17; and the receive signal on the second band may be received by using one or two of an MHB TRX channel or an MHB DRX channel, where a diversity receive channel may be shown by "- · - ·" in FIG. 17. If the first antenna 705 is held, the second antenna 706 may be further used as a main antenna, and the first antenna 705 may be used as a diversity antenna. In some other embodiments, an MHB channel may be further used to transmit a low frequency signal.

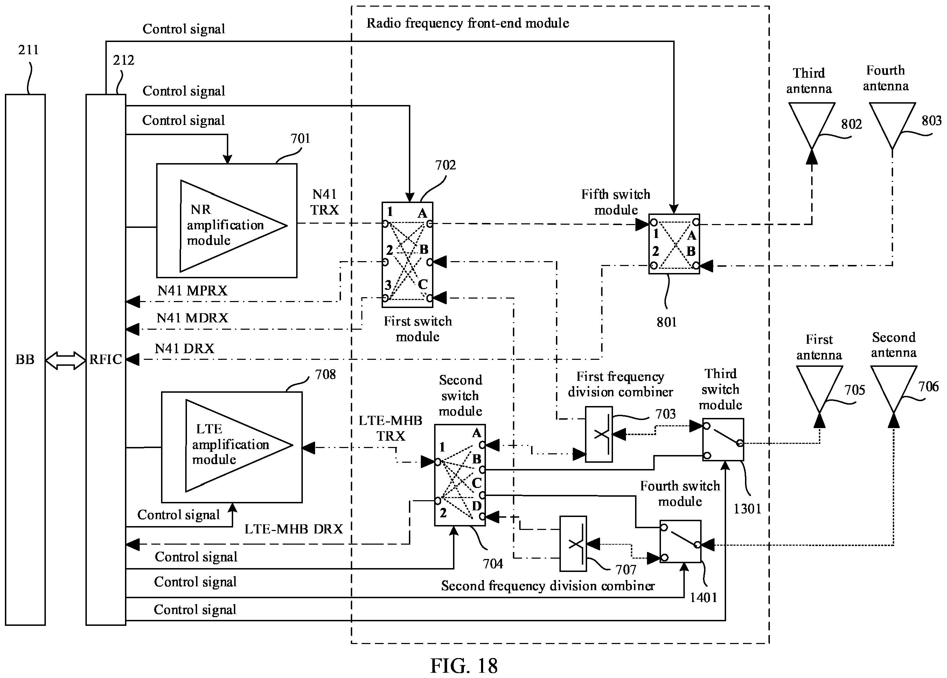

When the circuit in FIG. 15 is in an ENDC scenario, that is, a scenario in which an LTE middle band (middle band, MB) and an N41 band are combined, where the LTE band may be any one of bands such as B1, B3, or B39, if the third antenna 802 is used as a main antenna of N41, the transmit signal on the first band may be transmitted by using an N41 TRX channel, as shown by " - - - " in FIG. 18; and the receive signal on the first band may also be received by using one or more of an N41 TRX, an N41 DRX channel, an N41 MPRX channel, or an N41 MDRX channel, for example, the receive signal on the first band may be received by using two or four of the N41 TRX channel, the N41 DRX channel, the N41 MPRX channel, or the N41 MDRX channel. The N41 DRX channel, the N41 MPRX channel, or the N41 MDRX channel may be shown by "- · - ·" in FIG. 18. If the third antenna 802 is held, one of the first antenna 705, the second antenna 706, or the fourth antenna 803 may be used as a main antenna of the first band, and the other three antennas are used as diversity antennas of the first band. In addition, the SRS on N41 may alternatively be transmitted on the first antenna 705 to the fourth antenna 803 in a polling manner. The transmit signal on the second band may be transmitted by using an LTE TRX channel, as shown by " · · - · · - " in FIG. 18. When the first antenna 705 is used as a main antenna of the second band, the second antenna 706 is used as a diversity antenna of the second band. The receive signal on the second band may be received by using one or two of an MHB TRX channel or an MHB DRX channel. A diversity receive channel may be shown by " 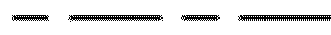 " in FIG. 18. The channel between the first frequency division combiner 703 and the first antenna 705 and the channel between the second frequency division combiner 707 and the second antenna 706 are channels shared by the first band and the second band, as shown by "- - - - - - - - - - -" in FIG. 18. If the first antenna 705 is held, the second antenna 706 may be further used as a main antenna of LTE, and the first antenna 705 may be used as a diversity antenna of LTE. In some other embodiments, the MHB TRX and DRX channels may be further used to transmit an LTE low frequency signal. Optionally, in the scenario shown in FIG. 18, another antenna may be further added to implement a 4×4 MIMO service of LTE. In this case, N41 is also in a 4×4 MIMO scenario, the band N41 or B41 is used as a communication band of a service card, and the LTE band is used as a band of a listening card.

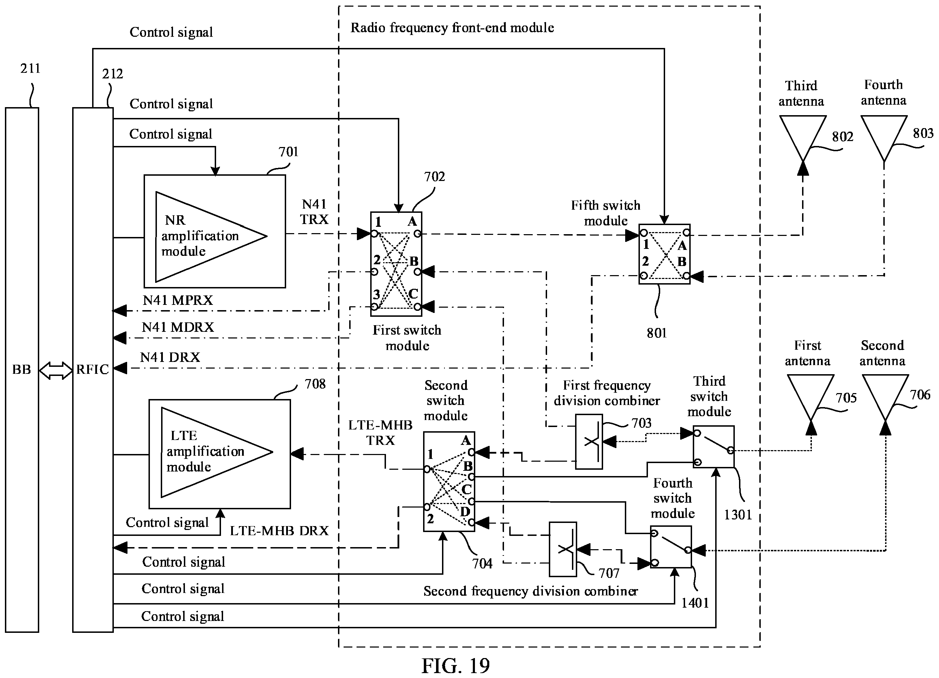

When the circuit in FIG. 15 is in a scenario in which B41 or N41 is combined with an LTE middle band, that is, a scenario in which B41 or N41 is used as a band of a primary card, that is, a service card, and LTE is used as a band of a secondary card, that is, a listening card, to implement DR-DSDS, if the third antenna 802 is used as a main antenna of the first band, a transmit channel of the transmit signal on the first band may be shown by " - - - " in FIG. 19. Another antenna is used as a receive antenna of the first band, and the receive signal on the first band may be received by using two or four of an N41 TRX channel, an N41 DRX channel, an N41 MPRX channel, or an N41 MDRX channel. The N41 DRX channel, the N41 MPRX channel, or the N41 MDRX channel may be shown by " - · - · " in FIG. 19. If the third antenna 802 is held, one of the first antenna 705, the second antenna 706, or the fourth antenna 803 may be further used as a main antenna, and the other three antennas are used as diversity antennas. In addition, the SRS on N41 may alternatively be transmitted on the first antenna 705 to the fourth antenna 803 in a polling manner. A receive signal on the LTE middle band passes through an LTE-MHB TRX channel and an LTE-MHB DRX channel, as shown by " 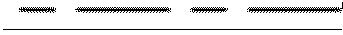 " in FIG. 19, and the channel may be used as a channel of a listening card. The channel between the first frequency division combiner 703 and the first antenna 705 and the channel between the second frequency division combiner 707 and the second antenna 706 are public channels for services of a primary card and a secondary card, as shown by "- - - - - - - - - - -". In this way, DR-DSDS in which B41 or N41 is used as a band of a service card is implemented.

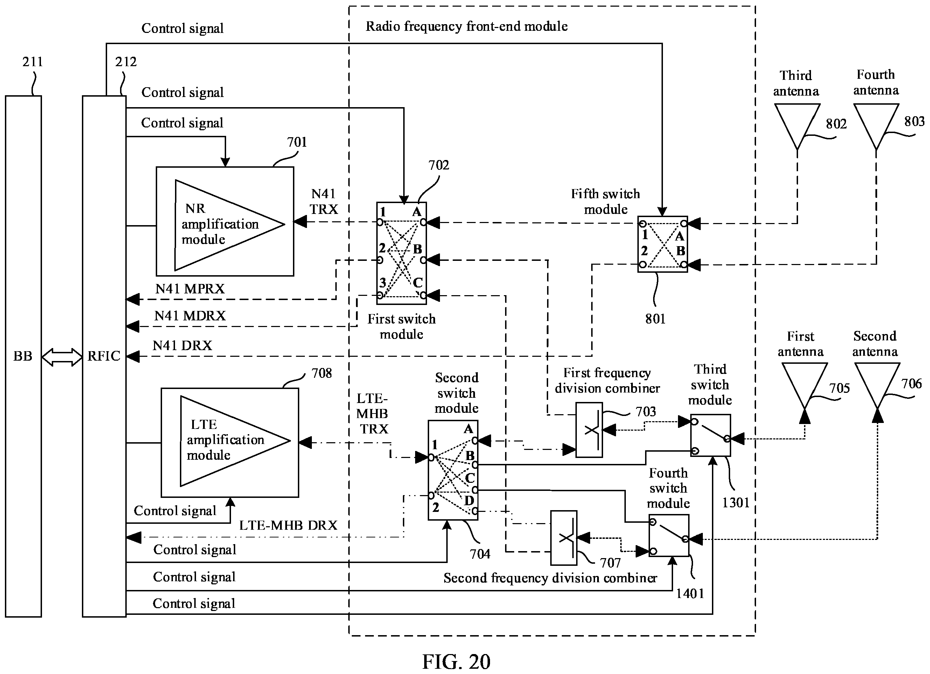

When the circuit in FIG. 15 is in a scenario in which B41 or N41 is combined with an LTE middle band, that is, a scenario in which B41 or N41 is used as a band of a listening card, and LTE is used as a band of a service card, to implement DR-DSDS, the receive signal on the first band is received by using one or more of an N41 TRX, an N41 DRX channel, an N41 MPRX channel, or an N41 MDRX channel, for example, the receive signal on the first band may be received by using two or four of the N41 TRX channel, the N41 DRX channel, the N41 MPRX channel, or the N41 MDRX channel. The N41 DRX channel, the N41 MPRX channel, or the N41 MDRX channel may be shown by " - - - " in FIG. 20. The transmit signal on the second band may be transmitted by using an LTE TRX channel, as shown by "- · - · " in FIG. 20. When the first antenna 705 is used as a main antenna of the second band, the second antenna 706 is used as a diversity antenna of the second band. The receive signal on the second band may be received by using one or two of an MHB TRX channel or an MHB DRX channel. A diversity receive channel may be shown by "· · - · · - " in FIG. 20. The channel between the first frequency division combiner 703 and the first antenna 705 and the channel between the second frequency division combiner 707 and the second antenna 706 are channels shared by the first band and the second band, as shown by "- - - - - - - - - - -" in FIG. 20. If the first antenna 705 is held, the second antenna 706 may be further used as a main antenna of the second band, and the first antenna 705 may be used as a diversity antenna of the second band. In this way, DR-DSDS in which the LTE middle band is used as a band of a service card is implemented.

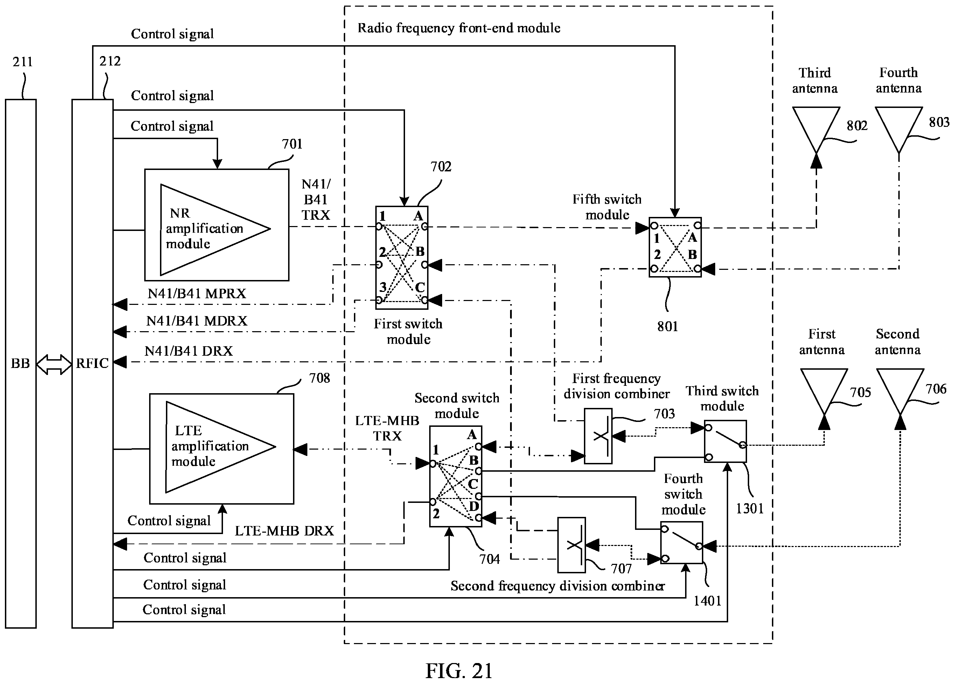

When the circuit in FIG. 15 is in an ENDC scenario, that is, a scenario in which B41 or N41 is combined with an LTE middle band, B41 or N41 is used as a band of a service card, and LTE is also used as a band of the service card, to implement DSDA, if the third antenna 802 is used as a main antenna of N41, the transmit signal on the first band may be transmitted by using an N41 TRX channel, as shown by " - - - " in FIG. 21. The receive signal on the first band may also be received by using one or more of an N41 TRX, an N41 DRX channel, an N41 MPRX channel, or an N41 MDRX channel, for example, the receive signal on the first band may be received by using two or four of the N41 TRX channel, the N41 DRX channel, the N41 MPRX channel, or the N41 MDRX channel. The N41 DRX channel, the N41 MPRX channel, or the N41 MDRX channel may be shown by "- · - · " in FIG. 21. If the third antenna 802 is held, one of the first antenna 705, the second antenna 706, or the fourth antenna 803 may be used as a main antenna of the first band, and the other three antennas are used as diversity antennas of the first band. In addition, the SRS on N41 may alternatively be transmitted on the first antenna 705 to the fourth antenna 803 in a polling manner. The transmit signal on the second band may be transmitted by using an LTE TRX channel, as shown by "· · - · · - " in FIG. 21. When the first antenna 705 is used as a main antenna of the second band, the second antenna 706 is used as a diversity antenna of the second band. The receive signal on the second band may be received by using one or two of an MHB TRX channel or an MHB DRX channel. A diversity receive channel of the second band may be shown by " 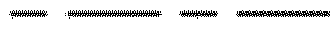 " in FIG. 21. The channel between the first frequency division combiner 703 and the first antenna 705 and the channel between the second frequency division combiner 707 and the second antenna 706 are channels shared by the first band and the second band, as shown by "- - - - - - - - - - -" in FIG. 21. If the first antenna 705 is held, the second antenna 706 may be further used as a main antenna of LTE, and the first antenna 705 may be used as a diversity antenna of LTE. In this way, a DSDA scenario in which N41 or B41 is used as a band of a service card, and the LTE middle band is also used as a band of the service card is implemented. In this embodiment, a band on which a signal is used as a primary card or a secondary card is not limited.

The signal flow directions in the channels shown in FIG. 16 to FIG. 21 are examples. A specific signal flow direction may be determined through switching of different switch modules and a frequency gating feature of a frequency division combiner. The foregoing examples are not intended to limit this embodiment of this application. In addition, in the foregoing embodiment, 1T4R is used as an example to describe SRS polling. In another embodiment, SRS polling is also applicable to scenarios such as 1T2R, 2T4R, and 4T4R.

Based on the foregoing radio frequency front-end circuit, an embodiment of this application further provides a method for controlling a radio frequency front-end circuit, applied to a radio frequency front-end module including a first switch module, a second switch module, a first frequency division combiner, and a second frequency division combiner. The first frequency division combiner is separately coupled to the first switch module and the second switch module, and the second frequency division combiner is separately coupled to the first switch module and the second switch module.

The method includes:
in a first state, controlling a transmit signal on a first band to pass through the first switch module and the first frequency division combiner to reach a first antenna, controlling a transmit signal on a second band to pass through the first frequency division combiner and the second switch module to reach the first antenna, and controlling a diversity receive signal on the second band to pass through a second antenna, the second switch module, and the second frequency division combiner; and
in a second state, controlling the transmit signal on the first band to pass through the first switch module and the second frequency division combiner to reach the second antenna, controlling the transmit signal on the second band to pass through the first frequency division combiner and the second switch module to reach the first antenna, and controlling the diversity receive signal on the second band to flow through the second antenna, the second switch module, and the second frequency division combiner.

In some embodiments, the first frequency division combiner is coupled to the first antenna or the second antenna by using the second switch module, and the second frequency division combiner is coupled to the second antenna or the first antenna by using the second switch module.

The method further includes: in the first state, controlling the transmit signal on the first band to pass through the first switch module, the first frequency division combiner, and the second switch module to reach the first antenna, controlling the transmit signal on the second band to pass through the first frequency division combiner and the second switch module to reach the first antenna, and controlling the diversity receive signal on the second band to flow through the second antenna, the second switch module, and the second frequency division combiner;
in the second state, controlling the transmit signal on the first band to pass through the first switch module, the second frequency division combiner, and the second switch module to reach the second antenna, controlling the transmit signal on the second band to pass through the first frequency division combiner and the second switch module to reach the first antenna, and controlling the diversity receive signal on the second band to flow through the second antenna, the second switch module, and the second frequency division combiner;
in a third state, controlling the transmit signal on the first band to pass through the first switch module, the first frequency division combiner, and the second switch module to reach the second antenna, controlling the transmit signal on the second band to pass through the first frequency division combiner and the second switch module to reach the second antenna, and controlling the diversity receive signal on the second band to flow through the first antenna, the second switch module, and the second frequency division combiner; and
in a fourth state, controlling the transmit signal on the first band to pass through the first switch module, the second frequency division combiner, and the second switch module to reach the first antenna, controlling the transmit signal on the second band to pass through the first frequency division combiner and the second switch module to reach the first antenna, and controlling the diversity receive signal on the second band to flow through the second antenna, the second switch module, and the second frequency division combiner.

In some embodiments, the second switch module is coupled to the first antenna by using the first frequency division combiner, and the second frequency division combiner is coupled to the second antenna by using the second switch module.

The method further includes: in a fifth state, controlling the transmit signal on the first band to pass through the first switch module and the first frequency division combiner to reach the first antenna, controlling the transmit signal on the second band to pass through the second switch module and the first frequency division combiner to reach the first antenna, and controlling the diversity receive signal on the second band to flow through the second antenna, the second switch module, and the second frequency division combiner; and
in a sixth state, controlling the transmit signal on the first band to pass through the first switch module, the second frequency division combiner, and the second switch module to reach the second antenna, controlling the transmit signal on the second band to pass through the second switch module and the first frequency division combiner to reach the first antenna, and controlling the diversity receive signal on the second band to flow through the second antenna, the second switch module, and the second frequency division combiner.

In some embodiments, the first frequency division combiner is coupled to the first antenna by using the second switch module, and the second switch module is coupled to the second antenna by using the second frequency division combiner.

The method further includes: in a seventh state, controlling the transmit signal on the first band to pass through the first switch module, the first frequency division combiner, and the second switch module to reach the first antenna, controlling the transmit signal on the second band to pass through the first frequency division combiner and the second switch module to reach the first antenna, and controlling the diversity receive signal on the second band to flow through the second antenna, the second frequency division combiner, and the second switch module; and
in an eighth state, controlling the transmit signal on the first band to pass through the first switch module and the second frequency division combiner to reach the second antenna, controlling the transmit signal on the second band to pass through the first frequency division combiner and the second switch module to reach the first antenna, and controlling the diversity receive signal on the second band to flow through the second antenna, the second frequency division combiner, and the second switch module.

In some embodiments, the first switch module is coupled to the first antenna by using the first frequency division combiner, the first switch module is coupled to the second antenna by using the second frequency division combiner, the second switch module is coupled to the first antenna by using the first frequency division combiner, and the second switch module is coupled to the second antenna by using the second frequency division combiner.

The method further includes: in a ninth state, controlling the transmit signal on the first band to pass through the first switch module and the first frequency division combiner to reach the first antenna, controlling the transmit signal on the second band to pass through the second switch module and the first frequency division combiner to reach the first antenna, and controlling the diversity receive signal on the second band to flow through the second antenna, the second frequency division combiner, and the second switch module;
in a tenth state, controlling the transmit signal on the first band to pass through the first switch module and the first frequency division combiner to reach the first antenna, controlling the transmit signal on the second band to pass through the second switch module and the second frequency division combiner to reach the second antenna, and controlling the diversity receive signal on the second band to flow through the first antenna, the first frequency division combiner, and the second switch module;
in an eleventh state, controlling the transmit signal on the first band to pass through the first switch module and the second frequency division combiner to reach the second antenna, controlling the transmit signal on the second band to pass through the second switch module and the first frequency division combiner to reach the first antenna, and controlling the diversity receive signal on the second band to flow through the second antenna, the second frequency division combiner, and the second switch module; and
in a twelfth state, controlling the transmit signal on the first band to pass through the first switch module and the second frequency division combiner to reach the second antenna, controlling the transmit signal on the second band to pass through the second switch module and the second frequency division combiner to reach the second antenna, and controlling the diversity receive signal on the second band to flow through the first antenna, the first frequency division combiner, and the second switch module.

In some embodiments, the radio frequency front-end module further includes a third switch module, separately coupled to the first frequency division combiner, the first antenna, and the second switch module. The method further includes: controlling the third switch module to switch a channel between the first frequency division combiner and the first antenna and a channel between the second switch module and the first antenna.

In some embodiments, the radio frequency front-end module further includes a fourth switch module, separately coupled to the second frequency division combiner, the second antenna, and the second switch module.

The method further includes: controlling the fourth switch module to switch a channel between the second frequency division combiner and the second antenna and a channel between the second switch module and the second antenna.

In some embodiments, the radio frequency front-end module further includes a fifth switch module, and the method further includes: controlling the fifth switch module to switch a channel of the transmit signal on the first band and a channel of a diversity receive signal on the first band.

In some embodiments, the first switch module is a three-pole three-throw switch module, and the second switch module is a double-pole four-throw switch module.

In some embodiments, the first band includes an N40 or N41 band in a 5th generation mobile communications technology 5G standard, and the second band includes a long term evolution LTE band in a 4th generation mobile communications technology 4G standard.

In some embodiments, the transmit signal on the first band is a sounding reference signal SRS.

In some embodiments, the transmit signal on the first band and a receive signal on the first band are service signals of a first card, a receive signal on the second band is a listening signal of a second card, the receive signal on the first band includes a main receive signal on the first band and/or the diversity receive signal on the first band, and the receive signal on the second band includes a main receive signal on the second band and/or the diversity receive signal on the second band.

In some embodiments, the transmit signal on the first band and a receive signal on the first band are service signals of a first card, the transmit signal on the second band and a receive signal on the second band are service signals of a second card, the receive signal on the first band includes a main receive signal on the first band and/or the diversity receive signal on the first band, and the receive signal on the second band includes a main receive signal on the second band and/or the diversity receive signal on the second band.

An implementation principle and a technical effect of the method for controlling a radio frequency front-end circuit in this embodiment of this application are similar to those of the radio frequency front-end module described in the foregoing embodiment, and details are not described herein again.

The foregoing describes in detail an example of the method for controlling a radio frequency front-end circuit provided in this application. It can be understood that to implement the foregoing functions, a corresponding apparatus includes a corresponding hardware structure and/or software module for performing the functions. A person skilled in the art should be easily aware that, the units and the algorithm steps in the examples described with reference to embodiments disclosed in this specification can be implemented in this application by hardware or a combination of hardware and computer software. Whether a function is performed by hardware or hardware driven by computer software depends on particular applications and design constraints of the technical solutions. A skilled person may use different methods to implement the described functions for each particular application, but this implementation should not be considered as beyond the scope of this application.

In this application, the apparatus for controlling a radio frequency front-end circuit may be divided into functional modules based on the foregoing method example. For example, functions may be divided into functional modules, or two or more functions may be integrated into one module. The integrated module may be implemented in a form of hardware, or may be implemented in a form of a software functional module. It should be noted that in this application, module division is an example and is merely a logical function division. In actual implementation, there may be another division manner.

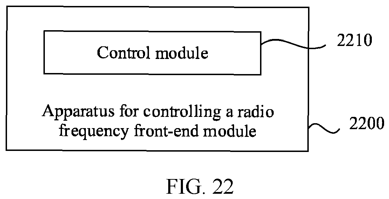

FIG. 22 is a schematic diagram of a structure of an apparatus for controlling a radio frequency front-end circuit according to this application. An apparatus 2200 includes a control module 2210, configured to perform the method for controlling a radio frequency front-end circuit in any one of the foregoing embodiments.

An embodiment of this application further provides an electronic device, including the apparatus 2200 for controlling a radio frequency front-end circuit.

An embodiment of this application further provides an electronic device, including the radio frequency front-end circuit. The electronic device provided in this embodiment is configured to perform the foregoing method for controlling a radio frequency front-end circuit. When an integrated unit is used, the electronic device may include a processing module, a storage module, and a communication module. The processing module may be configured to control and manage an action of a terminal device, for example, may be configured to support the terminal device in performing steps performed by a display unit, a detection unit, and a processing unit. The storage module may be configured to support the terminal device in storing program code, data, and the like. The communication module may be configured to support communication between the terminal device and another device.

The processing module may be a processor or a controller, and may implement or perform various example logical blocks, modules, and circuits described with reference to content disclosed in this application. The processor may alternatively be a combination for implementing a computing function, for example, a combination including one or more microprocessors or a combination of a digital signal processor (digital signal processor, DSP) and a microprocessor. The storage module may be a memory. The communication module may be specifically a device, such as a radio frequency circuit, a Bluetooth chip, or a Wi-Fi chip, that interacts with another terminal device.

In an embodiment, when the processing module is a processor and the storage module is a memory, the terminal device in this embodiment may be a device having the structure shown in FIG. 1.

An embodiment of this application further provides a computer-readable storage medium. The computer-readable storage medium stores a computer program, and when the computer program is executed by a processor, the processor is enabled to perform the method for controlling a radio frequency front-end circuit in any one of the foregoing embodiments.

An embodiment of this application further provides a computer program product. When the computer program product is run on an apparatus, the apparatus is enabled to perform the foregoing related steps, to implement the method for controlling a radio frequency front-end circuit in the foregoing embodiment. The apparatus may be a chip or an electronic device.

The electronic device, the computer-readable storage medium, the computer program product, or the chip provided in embodiments is configured to perform the corresponding method provided above. Therefore, for beneficial effects that can be achieved, refer to the beneficial effects in the corresponding method provided above. Details are not described herein again.

In the several embodiments provided in this application, it should be understood that the disclosed apparatus and method may be implemented in other manners. For example, the apparatus embodiments described above are merely examples. For example, module or unit division is merely logical function division and there may be another division manner in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may be one or more physical units, that is, may be located in one place, or may be distributed in different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A radio frequency front-end module, comprising:
a first switch module, configured to switch a channel of a transmit signal on a first band;
a second switch module, configured to: switch a channel of a transmit signal on a second band, and switch a channel of a diversity receive signal on the second band;
a first frequency division combiner, separately coupled to the first switch module and the second switch module; and
a second frequency division combiner, separately coupled to the first switch module and the second switch module, wherein
in a first state, the transmit signal on the first band passes through the first switch module and the first frequency division combiner to reach a first antenna, the transmit signal on the second band passes through the first frequency division combiner and the second switch module to reach the first antenna, and the diversity receive signal on the second band passes through a second antenna, the second switch module, and the second frequency division combiner; and
in a second state, the transmit signal on the first band passes through the first switch module and the second frequency division combiner to reach the second antenna, the transmit signal on the second band passes through the first frequency division combiner and the second switch module to reach the first antenna, and the diversity receive signal on the second band flows through the second antenna, the second switch module, and the second frequency division combiner.

2. The radio frequency front-end module according to claim 1, wherein the first frequency division combiner is coupled to the first antenna or the second antenna by using the second switch module, and the second frequency division combiner is coupled to the second antenna or the first antenna by using the second switch module;
in the first state, the transmit signal on the first band passes through the first switch module, the first frequency division combiner, and the second switch module to reach the first antenna, the transmit signal on the second band passes through the first frequency division combiner and the second switch module to reach the first antenna, and the diversity receive signal on the second band flows through the second antenna, the second switch module, and the second frequency division combiner;
in the second state, the transmit signal on the first band passes through the first switch module, the second frequency division combiner, and the second switch module to reach the second antenna, the transmit signal on the second band passes through the first frequency division combiner and the second switch module to reach the first antenna, and the diversity receive signal on the second band flows through the second antenna, the second switch module, and the second frequency division combiner;
in a third state, the transmit signal on the first band passes through the first switch module, the first frequency division combiner, and the second switch module to reach the second antenna, the transmit signal on the second band passes through the first frequency division combiner and the second switch module to reach the second antenna, and the diversity receive signal on the second band flows through the first antenna, the second switch module, and the second frequency division combiner; and
in a fourth state, the transmit signal on the first band passes through the first switch module, the second frequency division combiner, and the second switch module to reach the first antenna, the transmit signal on the second band passes through the first frequency division combiner and the second switch module to reach the first antenna, and the diversity receive signal on the second band flows through the second antenna, the second switch module, and the second frequency division combiner.

3. The radio frequency front-end module according to claim 1, wherein the second switch module is coupled to the first antenna by using the first frequency division combiner, and the second frequency division combiner is coupled to the second antenna by using the second switch module;
in a fifth state, the transmit signal on the first band passes through the first switch module and the first frequency division combiner to reach the first antenna, the transmit signal on the second band passes through the second switch module and the first frequency division combiner to reach the first antenna, and the diversity receive signal on the second band flows through the second antenna, the second switch module, and the second frequency division combiner; and
in a sixth state, the transmit signal on the first band passes through the first switch module, the second frequency division combiner, and the second switch module to reach the second antenna, the transmit signal on the second band passes through the second switch module and the first frequency division combiner to reach the first antenna, and the diversity receive signal on the second band flows through the second antenna, the second switch module, and the second frequency division combiner.

4. The radio frequency front-end module according to claim 1, wherein the first frequency division combiner is coupled to the first antenna by using the second switch module, and the second switch module is coupled to the second antenna by using the second frequency division combiner;
in a seventh state, the transmit signal on the first band passes through the first switch module, the first frequency division combiner, and the second switch module to reach the first antenna, the transmit signal on the second band passes through the first frequency division combiner and the second switch module to reach the first antenna, and the diversity receive signal on the second band flows through the second antenna, the second frequency division combiner, and the second switch module; and
in an eighth state, the transmit signal on the first band passes through the first switch module and the second frequency division combiner to reach the second antenna, the transmit signal on the second band passes through the first frequency division combiner and the second switch module to reach the first antenna, and the diversity receive signal on the second band flows through the second antenna, the second frequency division combiner, and the second switch module.

5. The radio frequency front-end module according to claim 1, wherein the first switch module is coupled to the first antenna by using the first frequency division combiner, the first switch module is coupled to the second antenna by using the second frequency division combiner, the second switch module is coupled to the first antenna by using the first frequency division combiner, and the second switch module is coupled to the second antenna by using the second frequency division combiner;
in a ninth state, the transmit signal on the first band passes through the first switch module and the first frequency division combiner to reach the first antenna, the transmit signal on the second band passes through the second switch module and the first frequency division combiner to reach the first antenna, and the diversity receive signal on the second band flows through the second antenna, the second frequency division combiner, and the second switch module;
in a tenth state, the transmit signal on the first band passes through the first switch module and the first frequency division combiner to reach the first antenna, the transmit signal on the second band passes through the second switch module and the second frequency division combiner to reach the second antenna, and the diversity receive signal on the second band flows through the first antenna, the first frequency division combiner, and the second switch module;
in an eleventh state, the transmit signal on the first band passes through the first switch module and the second frequency division combiner to reach the second antenna, the transmit signal on the second band passes through the second switch module and the first frequency division combiner to reach the first antenna, and the diversity receive signal on the second band flows through the second antenna, the second frequency division combiner, and the second switch module; and
in a twelfth state, the transmit signal on the first band passes through the first switch module and the second frequency division combiner to reach the second antenna, the transmit signal on the second band passes through the second switch module and the second frequency division combiner to reach the second antenna, and the diversity receive signal on the second band flows through the first antenna, the first frequency division combiner, and the second switch module.

6. The radio frequency front-end module according to any one of claims 1 to 5, further comprising:
a third switch module, separately coupled to the first frequency division combiner, the first antenna, and the second switch module, and configured to switch a channel between the first frequency division combiner and the first antenna and a channel between the second switch module and the first antenna.

7. The radio frequency front-end module according to any one of claims 1 to 6, further comprising:
a fourth switch module, separately coupled to the second frequency division combiner, the second antenna, and the second switch module, and configured to switch a channel between the second frequency division combiner and the second antenna and a channel between the second switch module and the second antenna.

8. The radio frequency front-end module according to any one of claims 1 to 7, further comprising:
a fifth switch module, configured to switch the channel of the transmit signal on the first band and a channel of a diversity receive signal on the first band.

9. The radio frequency front-end module according to any one of claims 1 to 8, wherein the first switch module is a three-pole three-throw switch module, and the second switch module is a double-pole four-throw switch module.

10. The radio frequency front-end module according to any one of claims 1 to 9, wherein the first band comprises an N40 or N41 band in a 5th generation mobile communications technology 5G standard, and the second band comprises a long term evolution LTE band in a 4th generation mobile communications technology 4G standard.

11. The radio frequency front-end module according to any one of claims 1 to 10, wherein the transmit signal on the first band is a sounding reference signal SRS.

12. The radio frequency front-end module according to any one of claims 1 to 10, wherein the transmit signal on the first band and a receive signal on the first band are service signals of a first card, a receive signal on the second band is a listening signal of a second card, the receive signal on the first band comprises a main receive signal on the first band and/or the diversity receive signal on the first band, and the receive signal on the second band comprises a main receive signal on the second band and/or the diversity receive signal on the second band.

13. The radio frequency front-end module according to any one of claims 1 to 10, wherein the transmit signal on the first band and a receive signal on the first band are service signals of a first card, the transmit signal on the second band and a receive signal on the second band are service signals of a second card, the receive signal on the first band comprises a main receive signal on the first band and/or the diversity receive signal on the first band, and the receive signal on the second band comprises a main receive signal on the second band and/or the diversity receive signal on the second band.

14. A method for controlling a radio frequency front-end module, applied to a radio frequency front-end module comprising a first switch module, a second switch module, a first frequency division combiner, and a second frequency division combiner, wherein the first frequency division combiner is separately coupled to the first switch module and the second switch module, and the second frequency division combiner is separately coupled to the first switch module and the second switch module; and
the method comprises:
in a first state, controlling a transmit signal on a first band to pass through the first switch module and the first frequency division combiner to reach a first antenna, controlling a transmit signal on a second band to pass through the first frequency division combiner and the second switch module to reach the first antenna, and controlling a diversity receive signal on the second band to pass through a second antenna, the second switch module, and the second frequency division combiner; and
in a second state, controlling the transmit signal on the first band to pass through the first switch module and the second frequency division combiner to reach the second antenna, controlling the transmit signal on the second band to pass through the first frequency division combiner and the second switch module to reach the first antenna, and controlling the diversity receive signal on the second band to flow through the second antenna, the second switch module, and the second frequency division combiner.

15. The method for controlling a radio frequency front-end module according to claim 14, wherein the first frequency division combiner is coupled to the first antenna or the second antenna by using the second switch module, and the second frequency division combiner is coupled to the second antenna or the first antenna by using the second switch module; and the method further comprises:
in the first state, controlling the transmit signal on the first band to pass through the first switch module, the first frequency division combiner, and the second switch module to reach the first antenna, controlling the transmit signal on the second band to pass through the first frequency division combiner and the second switch module to reach the first antenna, and controlling the diversity receive signal on the second band to flow through the second antenna, the second switch module, and the second frequency division combiner;
in the second state, controlling the transmit signal on the first band to pass through the first switch module, the second frequency division combiner, and the second switch module to reach the second antenna, controlling the transmit signal on the second band to pass through the first frequency division combiner and the second switch module to reach the first antenna, and controlling the diversity receive signal on the second band to flow through the second antenna, the second switch module, and the second frequency division combiner;
in a third state, controlling the transmit signal on the first band to pass through the first switch module, the first frequency division combiner, and the second switch module to reach the second antenna, controlling the transmit signal on the second band to pass through the first frequency division combiner and the second switch module to reach the second antenna, and controlling the diversity receive signal on the second band to flow through the first antenna, the second switch module, and the second frequency division combiner; and
in a fourth state, controlling the transmit signal on the first band to pass through the first switch module, the second frequency division combiner, and the second switch module to reach the first antenna, controlling the transmit signal on the second band to pass through the first frequency division combiner and the second switch module to reach the first antenna, and controlling the diversity receive signal on the second band to flow through the second antenna, the second switch module, and the second frequency division combiner.

16. The method for controlling a radio frequency front-end module according to claim 14, wherein the second switch module is coupled to the first antenna by using the first frequency division combiner, and the second frequency division combiner is coupled to the second antenna by using the second switch module; and the method further comprises:
in a fifth state, controlling the transmit signal on the first band to pass through the first switch module and the first frequency division combiner to reach the first antenna, controlling the transmit signal on the second band to pass through the second switch module and the first frequency division combiner to reach the first antenna, and controlling the diversity receive signal on the second band to flow through the second antenna, the second switch module, and the second frequency division combiner; and
in a sixth state, controlling the transmit signal on the first band to pass through the first switch module, the second frequency division combiner, and the second switch module to reach the second antenna, controlling the transmit signal on the second band to pass through the second switch module and the first frequency division combiner to reach the first antenna, and controlling the diversity receive signal on the second band to flow through the second antenna, the second switch module, and the second frequency division combiner.

17. The method for controlling a radio frequency front-end module according to claim 14, wherein the first frequency division combiner is coupled to the first antenna by using the second switch module, and the second switch module is coupled to the second antenna by using the second frequency division combiner; and the method further comprises:
in a seventh state, controlling the transmit signal on the first band to pass through the first switch module, the first frequency division combiner, and the second switch module to reach the first antenna, controlling the transmit signal on the second band to pass through the first frequency division combiner and the second switch module to reach the first antenna, and controlling the diversity receive signal on the second band to flow through the second antenna, the second frequency division combiner, and the second switch module; and
in an eighth state, controlling the transmit signal on the first band to pass through the first switch module and the second frequency division combiner to reach the second antenna, controlling the transmit signal on the second band to pass through the first frequency division combiner and the second switch module to reach the first antenna, and controlling the diversity receive signal on the second band to flow through the second antenna, the second frequency division combiner, and the second switch module.

18. The method for controlling a radio frequency front-end module according to claim 14, wherein the first switch module is coupled to the first antenna by using the first frequency division combiner, the first switch module is coupled to the second antenna by using the second frequency division combiner, the second switch module is coupled to the first antenna by using the first frequency division combiner, and the second switch module is coupled to the second antenna by using the second frequency division combiner; and the method further comprises:
in a ninth state, controlling the transmit signal on the first band to pass through the first switch module and the first frequency division combiner to reach the first antenna, controlling the transmit signal on the second band to pass through the second switch module and the first frequency division combiner to reach the first antenna, and controlling the diversity receive signal on the second band to flow through the second antenna, the second frequency division combiner, and the second switch module;
in a tenth state, controlling the transmit signal on the first band to pass through the first switch module and the first frequency division combiner to reach the first antenna, controlling the transmit signal on the second band to pass through the second switch module and the second frequency division combiner to reach the second antenna, and controlling the diversity receive signal on the second band to flow through the first antenna, the first frequency division combiner, and the second switch module;
in an eleventh state, controlling the transmit signal on the first band to pass through the first switch module and the second frequency division combiner to reach the second antenna, controlling the transmit signal on the second band to pass through the second switch module and the first frequency division combiner to reach the first antenna, and controlling the diversity receive signal on the second band to flow through the second antenna, the second frequency division combiner, and the second switch module; and
in a twelfth state, controlling the transmit signal on the first band to pass through the first switch module and the second frequency division combiner to reach the second antenna, controlling the transmit signal on the second band to pass through the second switch module and the second frequency division combiner to reach the second antenna, and controlling the diversity receive signal on the second band to flow through the first antenna, the first frequency division combiner, and the second switch module.

19. The method for controlling a radio frequency front-end module according to any one of claims 14 to 18, wherein the radio frequency front-end module further comprises a third switch module, separately coupled to the first frequency division combiner, the first antenna, and the second switch module; and
the method further comprises: controlling the third switch module to switch a channel between the first frequency division combiner and the first antenna and a channel between the second switch module and the first antenna.

20. The method for controlling a radio frequency front-end module according to any one of claims 14 to 19, wherein the radio frequency front-end module further comprises a fourth switch module, separately coupled to the second frequency division combiner, the second antenna, and the second switch module; and
the method further comprises: controlling the fourth switch module to switch a channel between the second frequency division combiner and the second antenna and a channel between the second switch module and the second antenna.

21. The method for controlling a radio frequency front-end module according to any one of claims 14 to 20, wherein the radio frequency front-end module further comprises a fifth switch module, and the method further comprises: controlling the fifth switch module to switch a channel of the transmit signal on the first band and a channel of a diversity receive signal on the first band.

22. The method for controlling a radio frequency front-end module according to any one of claims 14 to 21, wherein the first switch module is a three-pole three-throw switch module, and the second switch module is a double-pole four-throw switch module.

23. The method for controlling a radio frequency front-end module according to any one of claims 14 to 22, wherein the first band comprises an N40 or N41 band in a 5th generation mobile communications technology 5G standard, and the second band comprises a long term evolution LTE band in a 4th generation mobile communications technology 4G standard.

24. The method for controlling a radio frequency front-end module according to any one of claims 14 to 23, wherein the transmit signal on the first band is a sounding reference signal SRS.

25. The method for controlling a radio frequency front-end module according to any one of claims 14 to 23, wherein the transmit signal on the first band and a receive signal on the first band are service signals of a first card, a receive signal on the second band is a listening signal of a second card, the receive signal on the first band comprises a main receive signal on the first band and/or the diversity receive signal on the first band, and the receive signal on the second band comprises a main receive signal on the second band and/or the diversity receive signal on the second band.

26. The method for controlling a radio frequency front-end module according to any one of claims 14 to 23, wherein the transmit signal on the first band and a receive signal on the first band are service signals of a first card, the transmit signal on the second band and a receive signal on the second band are service signals of a second card, the receive signal on the first band comprises a main receive signal on the first band and/or the diversity receive signal on the first band, and the receive signal on the second band comprises a main receive signal on the second band and/or the diversity receive signal on the second band.

27. An apparatus for controlling a radio frequency front-end module, comprising a control module, configured to perform the method according to any one of claims 14 to 26.

28. An apparatus for controlling a radio frequency front-end module, comprising a processor, a memory, and an interface, wherein
the processor is separately coupled to the memory and the interface, the interface is separately coupled to a first switch module and a second switch module, and the processor is configured to perform the method according to any one of claims 14 to 26.

29. An electronic device, comprising the radio frequency front-end module according to any one of claims 1 to 13 and the apparatus according to claim 27 or 28.

30. A computer-readable storage medium, wherein the computer-readable storage medium stores a computer program, and when the computer program is executed by a processor, the processor is enabled to perform the method according to any one of claims 14 to 26.

31. A computer program product, wherein the computer program product comprises computer program code, and when the computer program code is run on an apparatus, the apparatus is enabled to perform the method according to any one of claims 14 to 26.
